# EUROPEAN PATENT APPLICATION

(11) **EP 4 566 998 A1**
(43) Date of publication of application: **11.06.2025**
(21) Application number: 24779925.7
(22) Date of filing: 22.03.2024
(51) Int. Cl.: C01G 25/00, B01J 23/63, B01J 32/00, B01J 37/03, B01J 37/08

(54) **ALUMINA-BASED COMPOSITE OXIDE AND METHOD FOR PRODUCING ALUMINA-BASED COMPOSITE OXIDE**

(30) Priority: 31.03.2023 JP 2023059185
(71) Applicant: Daiichi Kigenso Kagaku Kogyo Co., Ltd., Osaka-shi, Osaka 541-0041 (JP)
(72) Inventor: HIROSE,Yoshikazu, Osaka-shi, Osaka 559-0025 (JP); AKASHI,Ryo, Osaka-shi, Osaka 559-0025 (JP)
(74) Representative: Cabinet Beau de Loménie
(86) International application number: PCT/JP2024/011204
(87) International publication number: WO 2024/203806

(57) **Abstract**

This alumina-based composite oxide contains alumina and ceria and/or zirconia and satisfies all of requirements (1) to (4) in a total of 50 points of analysis in energy dispersion type X-Ray spectroscopy. Requirements: (1) among 50 measurement points, there is at least one measurement point at which the content of alumina is 50-99 mass% and the content of oxides other than alumina is 1-50 mass%; (2) among 50 measurement points, there is at least one measurement point at which the content of alumina is not less than 1 mass% and less than 50 mass% and the content of oxides other than alumina is more than 50 mass% and not more than 99 mass%; (3) the difference between the maximum alumina content and the minimum alumina content among the 50 measurement points is 20-95; and (4) the difference between the maximum and minimum values for the content of oxides other than alumina among the 50 measurement points is 20-95.

## Description

### TECHNICAL FIELD

The present invention relates to an alumina-based composite oxide and a method for producing an alumina-based composite oxide.

### BACKGROUND ART

As has been incorporated into recent exhaust gas regulation modes, exhaust gas temperatures rise significantly during driving at high speeds and ultra-high speeds. Hence, the used temperatures of catalysts for exhaust gas purification also have risen significantly compared to conventional temperatures, and it is difficult to suppress aggregation of catalyst metal elements due to sintering.

Patent Document 1 discloses, as a composite metal oxide porous body useful as a catalyst support, a composite metal oxide porous body, which is a mixture of first ultrafine particles containing alumina and second ultrafine particles containing zirconia and in which the first ultrafine particles and the second ultrafine particles are uniformly dispersed so that the requirement in which the standard deviation of the content of each metal element acquired for all metal elements contained in the porous body at 0.1% by mass or more by measuring the content (% by mass) of the metal elements in a microanalysis area of 20 nm square at 100 measurement points by energy dispersive X-ray spectroscopy using a spherical aberration corrected scanning transmission electron microscope is 10 or less (see claim 1).

### PRIOR ART DOCUMENT

### PATENT DOCUMENT

Patent Document 1: WO 2011/030875

### SUMMARY OF THE INVENTION

### PROBLEMS TO BE SOLVED BY THE INVENTION

Conventionally, in the alumina-containing composite oxide for supporting catalyst metal elements, a material having uniform element distribution has been used as exemplified in Patent Document 1 in order to suppress aggregation of the catalyst metal element when exposed to high temperature regions for long periods of time.

However, the present inventors have found out that the metal catalyst elements may be aggregated on elements of an alumina-containing composite oxide that tend to become inactive when exposed to high temperature regions for long periods of time if the element distribution in the alumina-containing composite oxide is extremely uniform.

The present invention has been devised in view of the above-described problems, and an object thereof is to provide an alumina-containing composite oxide capable of further suppressing aggregation of catalyst metal elements when exposed to a high temperature region for a long period of time. Another object of the present invention is to provide a method for producing an alumina-based composite oxide, by which the alumina-based composite oxide can be obtained.

### MEANS FOR SOLVING THE PROBLEMS

In order to solve the above problems, the present inventors have conducted extensive studies on alumina-containing composite oxides. As a result, the present inventors have found out that it is possible to further suppress aggregation of the catalyst metal element when exposed to a high temperature region for a long period of time by appropriately controlling the element distribution in the alumina-containing composite oxide with high precision, and thus completed the present invention.

In other words, the present invention provides the following.
[1] An alumina-based composite oxide containing:
   alumina; and
   ceria and/or zirconia, in which
   all of the following (1) to (4) are satisfied in point analysis of a total of 50 points according to the following procedures a to c by energy dispersive X-ray spectroscopy:
      (1) among 50 measurement points, there are one or more measurement points at which an alumina content is 50% by mass or more and 99% by mass or less and a content of element oxides other than alumina is 1% by mass or more and 50% by mass or less,
      (2) among 50 measurement points, there are one or more measurement points at which an alumina content is 1% by mass or more and less than 50% by mass and a content of element oxides other than alumina is more than 50% by mass and 99% by mass or less,
      (3) a difference between maximum and minimum values of an alumina content at 50 measurement points is 20 or more and 95 or less, and
      (4) a difference between maximum and minimum values of a content of element oxides other than alumina at 50 measurement points is 20 or more and 95 or less,
   <procedures>
   a: among particle images observed under a scanning electron microscope, one particle image having a cross section of 4 µm or more in length and 4 µm or more in width is selected,
   b: composition analysis is performed at 25 measurement points spaced 1 µm apart in an area of 4 µm in length and 4 µm in width on the selected particle image, and
   c: another particle image different from the one selected in the procedure a is selected and the same composition analysis as in the procedure b is performed.

According to the configuration, in a particle having a cross section of 4 µm or more in length and 4 µm or more in width, there is variation in element distribution that satisfies (1) to (4). In other words, in tertiary particles constituting the alumina-based composite oxide, there is a certain degree of variation in element distribution. Therefore, when a metal catalyst element is supported on the alumina-based composite oxide, the metal catalyst element is preferentially supported on the element for which the metal catalyst element exhibits high affinity. In a case where the affinity for the support is high, the aggregation of metal catalyst elements is suppressed by the anchor effect and the like when exposed to a high temperature region for a long period of time as well, and a more active state is maintained as a metal catalyst. There are a number of cases where an element that exhibits high affinity for a metal catalyst element often acts as a promoter. Therefore, it is expected that the catalytic activity is improved as the metal catalyst element is preferentially supported in the vicinity of the promoter. In addition, since alumina and an added metal element exist in the same tertiary particle, alumina and the added metal element act as diffusion barriers to each other when exposed to a high temperature region for a long period of time, and deterioration of the catalyst is suppressed.

Furthermore, the present invention provides the following.
The alumina-based composite oxide according to [1], in which all of the following (5) and (6) are further satisfied in the point analysis of 50 points:
(5) among 50 measurement points, there are one or more measurement points at which an alumina content is 55% by mass or more and 99% by mass or less and a content of element oxides other than alumina is 1% by mass or more and 45% by mass or less, and
(6) among 50 measurement points, there are one or more measurement points at which an alumina content is 1% by mass or more and 45% by mass or less and a content of element oxides other than alumina is 55% by mass or more and 99% by mass or less.

When there is variation that further satisfies (5) and (6) in addition to (1) to (4) in tertiary particles constituting the alumina-based composite oxide, the aggregation of metal catalyst elements is further suppressed.

Furthermore, the present invention provides the following.
The alumina-based composite oxide according to [1], in which all of the following (7) and (8) are further satisfied in the point analysis of 50 points:
(7) among 50 measurement points, there are ten or more measurement points at which an alumina content is 50% by mass or more and 99% by mass or less and a content of element oxides other than alumina is 1% by mass or more and 50% by mass or less, and
(8) among 50 measurement points, there are ten or more measurement points at which an alumina content is 1% by mass or more and less than 50% by mass and a content of element oxides other than alumina is more than 50% by mass and 99% by mass or less.

According to the invention of [3], the aggregation of metal catalyst elements is further suppressed.

Furthermore, the present invention provides the following.
The alumina-based composite oxide according to [2], in which all of the following (9) and (10) are further satisfied in the point analysis of 50 points:
(9) among 50 measurement points, there are five or more measurement points at which an alumina content is 55% by mass or more and 99% by mass or less and a content of element oxides other than alumina is 1% by mass or more and 45% by mass or less, and
(10) among 50 measurement points, there are five or more measurement points at which an alumina content is 1% by mass or more and 45% by mass or less and a content of element oxides other than alumina is 55% by mass or more and 99% by mass or less.

When there is variation that further satisfies (9) and (10) in addition to (1) to (4) in tertiary particles constituting the alumina-based composite oxide, the aggregation of metal catalyst elements is further suppressed.

Furthermore, the present invention provides the following.
The alumina-based composite oxide according to [1] to [4], in which an alumina content is 15% by mass or more and 80% by mass or less in composition analysis performed by an X-ray fluorescence method.

When the alumina content is 15% by mass or more and 80% by mass or less in composition analysis performed by an X-ray fluorescence method, the aggregation of metal catalyst elements is further suppressed when a metal catalyst element is supported on the alumina-based composite oxide.

In composition analysis performed by an X-ray fluorescence method, the content of each oxide contained in the entire alumina-based composite oxide is acquired. Meanwhile, the content of each oxide at the measurement point on the surface being analyzed rather than in the entire alumina-based composite oxide is acquired in the point analysis by energy dispersive X-ray spectroscopy ([1] and [2]).

Furthermore, the present invention provides the following.
The alumina-based composite oxide according to any one of [1] to [5], in which a content of ceria and/or zirconia is 0.1% by mass or more and 85% by mass or less in composition analysis performed by an X-ray fluorescence method.

Since ceria and/or zirconia function as a promoter, the alumina-based composite oxide is suitable as a catalyst support when the content of ceria and/or zirconia is 0.1% by mass or more. When the content of ceria and/or zirconia is 85% by mass or less, thermal degradation can be suppressed.

Furthermore, the present invention provides the following.
The alumina-based composite oxide according to any one of [1] to [6], containing any one or more of oxides of rare earth elements (excluding cerium and promethium) as an oxide other than alumina, ceria, and zirconia.

When any one or more of oxides of rare earth elements (excluding cerium and promethium) are contained, the crystal phases of alumina, ceria, and zirconia are stabilized, and deterioration of the catalyst is further suppressed.

Furthermore, the present invention provides the following.
A method for producing the alumina-based composite oxide according to any one of [1] to [7], the method including:
a step 1 of adding an acid to sodium aluminate to obtain a hydrated alumina suspension A;
a step 2 of preparing an aqueous solution B-1 of a raw material salt containing cerium and/or zirconium and/or a suspension B-2 of a raw material salt containing cerium and/or zirconium;
a step 3 of mixing the suspension A with the aqueous solution B-1 and/or the suspension B-2 to obtain a precipitate of an aluminum-based composite precursor; and
a step 4 of performing heat treatment on the precipitate to obtain an alumina-based composite oxide.

The general coprecipitation method is effective for producing composite oxides having uniform element distribution, but it is difficult to control the element distribution by anything other than the difference in solubility product in the precipitation. Meanwhile, in the mixing method in which crystallized alumina is mixed with crystallized ceria and zirconia, the constituent elements of individual tertiary particles are the same as those before mixing, and in the element distribution, it is difficult to exert the properties due to the compounding of alumina with ceria and zirconia.

With regard to the above problems, according to the invention of [8], it is possible to dispose precursors of ceria and zirconia on the surface and/or inside of hydrated alumina by mixing the hydrated alumina suspension A with the aqueous solution B-1 and/or suspension B-2 of a raw material salt containing cerium and/or zirconium. This makes it possible for alumina secondary particles containing ceria and zirconia to coexist with secondary particles of ceria and zirconia containing alumina in the tertiary particles of the alumina-based composite oxide. In addition, by controlling aggregation of hydrated alumina and the precursors of ceria and zirconia, it is possible to control the element distribution in the composite oxide tertiary particles.

By such a production method, it is possible to obtain an alumina-based composite oxide having the properties of (1) to (4) in [1].

### EFFECT OF THE INVENTION

According to the present invention, there is provided an alumina-containing composite oxide capable of further suppressing aggregation of catalyst metal elements when exposed to a high temperature region for a long period of time. It is possible to provide a method for producing an alumina-based composite oxide, by which the alumina-based composite oxide can be obtained.

### BRIEF DESCRIPTION OF THE DRAWINGS

Fig. 1 is a model diagram of tertiary particles of alumina-based composite oxides according to Examples 1 to 34.
Fig. 2 is a model diagram of tertiary particles of alumina-based composite oxides according to Comparative Examples 1, 3 to 5, 7, 9, 12, and 13.
Fig. 3 is a model diagram of tertiary particles of alumina-based composite oxides according to Comparative Examples 2, 6, 8, 10, and 14.
Fig. 4 is a model diagram of a tertiary particle of an alumina-based composite oxide according to Comparative Example 11.
Fig. 5 is an X-ray diffraction spectrum of an alumina-based composite oxide according to Example 1.

### MODE FOR CARRYING OUT THE INVENTION

Hereinafter, embodiments of the present invention will be described. However, the present invention is not limited only to these embodiments. The alumina-based composite oxide referred to herein is a common alumina-based composite oxide and contains impurity metal compounds including hafnium at 10% by mass or less. The terms "comprise" and "contain" herein include the concepts of "comprise", "contain", "substantially consist of", and "consist of".

The maximum value and minimum value of content of each component shown below should each independently be considered as a preferable minimum value and a preferable maximum value of the present invention regardless of the contents of other components.

Further, the maximum values and the minimum values of various parameters (measured values and the like) shown below should each independently be considered as preferable minimum values and maximum values of the present invention regardless of the content (composition) of each component.

### [Alumina-based composite oxide]

The alumina-based composite oxide according to the present embodiment is an alumina-based composite oxide containing:
alumina; and
ceria and/or zirconia, in which
all of the following (1) to (4) are satisfied in point analysis of a total of 50 points according to the following procedures a to c by energy dispersive X-ray spectroscopy:
   (1) among 50 measurement points, there are one or more measurement points at which an alumina content is 50% by mass or more and 99% by mass or less and a content of element oxides other than alumina is 1% by mass or more and 50% by mass or less,
   (2) among 50 measurement points, there are one or more measurement points at which an alumina content is 1% by mass or more and less than 50% by mass and a content of element oxides other than alumina is more than 50% by mass and 99% by mass or less,
   (3) a difference between maximum and minimum values of an alumina content at 50 measurement points is 20 or more and 95 or less, and
   (4) a difference between maximum and minimum values of a content of element oxides other than alumina at 50 measurement points is 20 or more and 95 or less,

### <procedures>

a: among particle images observed under a scanning electron microscope, one particle image having a cross section of 4 µm or more in length and 4 µm or more in width is selected,
b: composition analysis is performed at 25 measurement points spaced 1 µm apart in an area of 4 µm in length and 4 µm in width on the selected particle image, and
c: another particle image different from the one selected in the procedure a is selected and the same composition analysis as in the procedure b is performed.

According to the alumina-based composite oxide, in a particle having a cross section of 4 µm or more in length and 4 µm or more in width, there is variation in element distribution that satisfies (1) to (4). In other words, in tertiary particles constituting the alumina-based composite oxide, there is a certain degree of variation in element distribution. Therefore, when a metal catalyst element is supported on the alumina-based composite oxide, the metal catalyst element is preferentially supported on the element for which the metal catalyst element exhibits high affinity. In a case where the affinity for the support is high, the aggregation of metal catalyst elements is suppressed by the anchor effect and the like when exposed to a high temperature region for a long period of time as well, and a more active state is maintained as a metal catalyst. There are a number of cases where an element that exhibits high affinity for a metal catalyst element often acts as a promoter. Therefore, it is expected that the catalytic activity is improved as the metal catalyst element is preferentially supported in the vicinity of the promoter. In addition, since alumina and added metal elements exist in the same tertiary particle, each of these acts as a diffusion barrier when exposed to a high temperature region for a long period of time, and deterioration of the catalyst is suppressed.

Here, in this specification, tertiary particles refer to particles formed by aggregation of secondary particles, and secondary particles refer to particles formed by aggregation of crystallites (primary particles).

From the viewpoint of suppressing the aggregation of metal catalyst elements, the measurement points that satisfy (1) are preferably 2 or more, more preferably 4 or more, still more preferably 7 or more, particularly preferably 10 or more.

From the viewpoint of suppressing the aggregation of metal catalyst elements, the measurement points that satisfy (1) are preferably 48 or less, more preferably 46 or less, still more preferably 43 or less, particularly preferably 40 or less.

From the viewpoint of suppressing the aggregation of metal catalyst elements, the measurement points that satisfy (1) are preferably 2 or more and 48 or less, more preferably 4 or more and 46 or less, still more preferably 7 or more and 43 or less, particularly preferably 10 or more and 40 or less.

From the viewpoint of suppressing the aggregation of metal catalyst elements, the measurement points that satisfy (2) are preferably 2 or more, more preferably 4 or more, still more preferably 7 or more, particularly preferably 10 or more.

From the viewpoint of suppressing the aggregation of metal catalyst elements, the measurement points that satisfy (2) are preferably 48 or less, more preferably 46 or less, still more preferably 43 or less, particularly preferably 40 or less.

From the viewpoint of suppressing the aggregation of metal catalyst elements, the measurement points that satisfy (2) are preferably 2 or more and 48 or less, more preferably 4 or more and 46 or less, still more preferably 7 or more and 43 or less, particularly preferably 10 or more and 40 or less.

The sum of the measurement points that satisfy (1) and the measurement points that satisfy (2) is preferably 50. In other words, it is preferable that all of the 50 measurement points satisfy either (1) or (2).

In particular, in the alumina-based composite oxide, it is preferable that all of the following (7) and (8) are further satisfied:
(7) among 50 measurement points, there are ten or more measurement points at which an alumina content is 50% by mass or more and 99% by mass or less and a content of element oxides other than alumina is 1% by mass or more and 50% by mass or less, and
(8) among 50 measurement points, there are ten or more measurement points at which an alumina content is 1% by mass or more and less than 50% by mass and a content of element oxides other than alumina is more than 50% by mass and 99% by mass or less.

The difference between the maximum and minimum values of the alumina content at the 50 measurement points specified in (3) is preferably 21 or more, more preferably 23 or more, still more preferably 25 or more from the viewpoint of suppressing the aggregation of metal catalyst elements.

The difference between the maximum and minimum values of the alumina content at the 50 measurement points specified in (3) is preferably 94 or less, more preferably 92 or less, still more preferably 90 or less from the viewpoint of suppressing the deterioration of catalyst support (or suppressing the aggregation of metal catalyst elements).

The difference between the maximum and minimum values of the alumina content at the 50 measurement points specified in (3) is preferably 21 or more and 94 or less, more preferably 23 or more and 92 or less, still more preferably 25 or more and 90 or less from the viewpoint of suppressing the aggregation of metal catalyst elements.

The difference between the maximum and minimum values of the content of element oxides other than alumina at the 50 measurement points specified in (4) is preferably 21 or more, more preferably 23 or more, still more preferably 25 or more from the viewpoint of suppressing the aggregation of metal catalyst elements.

The difference between the maximum and minimum values of the content of element oxides other than alumina at the 50 measurement points specified in (4) is preferably 94 or less, more preferably 92 or less, still more preferably 90 or less from the viewpoint of suppressing the deterioration of catalyst support (or suppressing the aggregation of metal catalyst elements).

The difference between the maximum and minimum values of the content of element oxides other than alumina at the 50 measurement points specified in (4) is preferably 21 or more and 94 or less, more preferably 23 or more and 92 or less, still more preferably 25 or more and 90 or less from the viewpoint of suppressing the aggregation of metal catalyst elements.

In the alumina-based composite oxide, it is preferable that all of the following (5) and (6) are further satisfied:
(5) among 50 measurement points, there are one or more measurement points at which an alumina content is 55% by mass or more and 99% by mass or less and a content of element oxides other than alumina is 1% by mass or more and 45% by mass or less, and
(6) among 50 measurement points, there are one or more measurement points at which an alumina content is 1% by mass or more and 45% by mass or less and a content of element oxides other than alumina is 55% by mass or more and 99% by mass or less.

When there is variation that further satisfies (5) and (6) in addition to (1) to (4) in tertiary particles constituting the alumina-based composite oxide, the aggregation of metal catalyst elements is further suppressed.

From the viewpoint of suppressing the aggregation of metal catalyst elements, the measurement points that satisfy (5) are preferably 2 or more, more preferably 3 or more, still more preferably 5 or more.

From the viewpoint of suppressing the aggregation of metal catalyst elements, the measurement points that satisfy (5) are preferably 48 or less, more preferably 47 or less, still more preferably 45 or less.

From the viewpoint of suppressing the aggregation of metal catalyst elements, the measurement points that satisfy (5) are preferably 2 or more and 48 or less, more preferably 3 or more and 47 or less, still more preferably 5 or more and 45 or less.

From the viewpoint of suppressing the aggregation of metal catalyst elements, the measurement points that satisfy (6) are preferably 2 or more, more preferably 3 or more, still more preferably 5 or more.

From the viewpoint of suppressing the aggregation of metal catalyst elements, the measurement points that satisfy (6) are preferably 48 or less, more preferably 47 or less, still more preferably 45 or less.

From the viewpoint of suppressing the aggregation of metal catalyst elements, the measurement points that satisfy (6) are preferably 2 or more and 48 or less, more preferably 3 or more and 47 or less, still more preferably 5 or more and 45 or less.

In particular, in the alumina-based composite oxide, it is preferable that all of the following (9) and (10) are further satisfied:
(9) among 50 measurement points, there are five or more measurement points at which an alumina content is 55% by mass or more and 99% by mass or less and a content of element oxides other than alumina is 1% by mass or more and 45% by mass or less, and
(10) among 50 measurement points, there are five or more measurement points at which an alumina content is 1% by mass or more and 45% by mass or less and a content of element oxides other than alumina is 55% by mass or more and 99% by mass or less.

In the alumina-based composite oxide, it is preferable that all of the following (a) and (b) are further satisfied:
(a) among 50 measurement points, there are one or more measurement points at which the alumina content is 60% by mass or more and 99% by mass or less and a content of element oxides other than alumina is 1% by mass or more and 40% by mass or less, and
(b) among 50 measurement points, there are one or more measurement points at which the alumina content is 1% by mass or more and 40% by mass or less and a content of element oxides other than alumina is 60% by mass or more and 99% by mass or less.

When there is variation that satisfies (a) and (b) in addition to (1) to (6) in tertiary particles constituting the alumina-based composite oxide, the aggregation of metal catalyst elements is further suppressed.

From the viewpoint of suppressing the aggregation of metal catalyst elements, the measurement points that satisfy (a) are preferably 2 or more, more preferably 3 or more, still more preferably 4 or more.

From the viewpoint of suppressing the aggregation of metal catalyst elements, the measurement points that satisfy (a) are preferably 48 or less, more preferably 47 or less, still more preferably 46 or less.

From the viewpoint of suppressing the aggregation of metal catalyst elements, the measurement points that satisfy (a) are preferably 2 or more and 48 or less, more preferably 3 or more and 47 or less, still more preferably 4 or more and 46 or less.

From the viewpoint of suppressing the aggregation of metal catalyst elements, the measurement points that satisfy (b) are preferably 2 or more, more preferably 3 or more, still more preferably 4 or more.

From the viewpoint of suppressing the aggregation of metal catalyst elements, the measurement points that satisfy (b) are preferably 48 or less, more preferably 47 or less, still more preferably 46 or less.

From the viewpoint of suppressing the aggregation of metal catalyst elements, the measurement points that satisfy (b) are preferably 2 or more and 48 or less, more preferably 3 or more and 47 or less, still more preferably 4 or more and 46 or less.

(1) to (10) and (a) to (b) can be controlled by the production method. Specifically, (1) to (10) and (a) to (b) can be controlled by the following production method to be described later.

A method for producing an alumina-based composite oxide, the method including:
a step 1 of adding an acid to sodium aluminate to obtain a hydrated alumina suspension A;
a step 2 of preparing an aqueous solution B-1 of a raw material salt containing cerium and/or zirconium and/or a suspension B-2 of a raw material salt containing cerium and/or zirconium;
a step 3 of mixing the suspension A with the aqueous solution B-1 and/or the suspension B-2 to obtain a precipitate of an aluminum-based composite precursor; and
a step 4 of performing heat treatment on the precipitate to obtain an alumina-based composite oxide.

### <Particle diameter D₅₀>

The particle diameter D₅₀ of the alumina-based composite oxide is preferably 3.0 µm or more and 200 µm or less. When the particle diameter D₅₀ is 200 µm or less, coarse particles do not remain when the alumina-based composite oxide is pulverized to have an arbitrary particle diameter. When the particle diameter D₅₀ is 3.0 µm or more, it is possible to cause variation in the element distribution in the same tertiary particle.

The particle diameter D₅₀ is more preferably 3.5 µm or more, still more preferably 4.0 µm or more. The particle diameter D₅₀ is more preferably 150 µm or less, still more preferably 120 µm or less. The particle diameter D₅₀ refers to a value acquired by the method described in Examples.

### <Particle diameter D₉₀>

The particle diameter D₉₀ of the alumina-based composite oxide is preferably 4.0 µm or more and 300 µm or less. When the particle diameter D₉₀ is 300 µm or less, coarse particles do not remain when the alumina-based composite oxide is pulverized to have an arbitrary particle diameter. When the particle diameter D₉₀ is 4.0 µm or more, it is possible to cause variation in the element distribution in the same tertiary particle.

The particle diameter D₉₀ is more preferably 6.0 µm or more, still more preferably 8.0 µm or more. The particle diameter D₉₀ is more preferably 250 µm or less, still more preferably 220 µm or less. The particle diameter D₉₀ refers to a value acquired by the method described in Examples.

When the particle diameter D₅₀ is measured, not only tertiary particles but also unaggregated secondary particles may be contained, but the amount of unaggregated secondary particles that may be contained in the alumina-based composite oxide is significantly small. Therefore, the particle diameter D₅₀ may be regarded as representing the particle diameter D₅₀ of tertiary particles.

In the alumina-based composite oxide, the pore volume over the entire range of the pore diameter distribution (pore diameter of 3 nm or more and less than 200 nm) determined by a nitrogen adsorption/desorption method is preferably 0.10 mL/g or more and 1.0 mL/g or less.

When the pore volume is 0.10 mL/g or more, the metal catalyst element is also supported in the pores, so that segregation due to the metal catalyst elements that have not been supported is less likely to occur.

When the pore volume is 1.0 mL/g or less, the secondary particles present in the same tertiary particle are densely aggregated, and tertiary particles having variation in the element distribution can be formed.

The pore volume is more preferably 0.15 mL/g or more, still more preferably 0.20 mL/g or more.

The pore volume is more preferably 0.90 mL/g or less, still more preferably 0.80 mL/g or less.

The pore volume is more preferably 0.15 mL/g or more and 0.90 mL/g or less, still more preferably 0.20 mL/g or more and 0.80 mL/g or less.

### [Rh particle diameter after supporting of Rh and heat treatment]

In a case where the alumina content in the alumina-based composite oxide is 50% by mass or more and 80% by mass or less, the Rh particle diameter is preferably 90 µm or less after Rh is supported under the following supporting conditions and heat treatment is performed under the following heat treatment conditions.

In a case where the alumina content in the alumina-based composite oxide is 30% by mass or more and less than 50% by mass, the Rh particle diameter is preferably 95 µm or less after Rh is supported under the following supporting conditions and heat treatment is performed under the following heat treatment conditions.

In a case where the alumina content in the alumina-based composite oxide is 15% by mass or more and less than 30% by mass, the Rh particle diameter is preferably 110 µm or less after Rh is supported under the following supporting conditions and heat treatment is performed under the following heat treatment conditions.

When the Rh particle diameter after heat treatment is performed is equal to or less than the particle diameter, it can be said that aggregation of the catalyst metal element when exposed to a high temperature region for a long period of time is further suppressed.

### <Supporting conditions>

The alumina-based composite oxide is impregnated with an 8% Rh nitrate solution at 2% by mass (in terms of Rh) with respect to 100% by mass of the alumina-based composite oxide, drying is performed at 100°C, and then calcination is performed at 500°C for 5 hours to obtain a Rh-supported powder.

### <Heat treatment conditions>

Heat treatment is performed on the obtained Rh-supported powder in air at 1200°C for 12 hours to obtain a sample subjected to heat treatment.

In a case where the alumina content is 50% by mass or more and 80% by mass or less, the Rh particle diameter is more preferably 85 µm or less, still more preferably 80 µm or less.

In a case where the alumina content is 30% by mass or more and less than 50% by mass, the Rh particle diameter is more preferably 90 µm or less, still more preferably 85 µm or less.

In a case where the alumina content is 15% by mass or more and less than 30% by mass, the Rh particle diameter is more preferably 105 µm or less, still more preferably 100 µm or less.

It is more preferable as the Rh particle diameter is smaller, but the Rh particle diameter is, for example, 20 µm or more or 30 µm or more, regardless of the alumina content.

The Rh particle diameter refers to a value acquired by the method described in Examples.

The alumina-based composite oxide contains alumina. The alumina-based composite oxide contains alumina, and can be thus suitably used as a catalyst support.

The alumina content is 15% by mass or more and 80% by mass or less in composition analysis performed by an X-ray fluorescence method. When the alumina content is 15% by mass or more and 80% by mass or less, thermal degradation of the catalyst is suppressed, and the aggregation of metal catalyst elements is further suppressed when a metal catalyst element is supported on the alumina-based composite oxide.

The alumina content is more preferably 20% by mass or more, still more preferably 25% by mass or more. The alumina content is more preferably 75% by mass or less, still more preferably 70% by mass or less.

The alumina-based composite oxide contains ceria and/or zirconia. The alumina-based composite oxide contains ceria and/or zirconia, and can be thus suitably used as a catalyst support.

The content of ceria and/or zirconia is 0.1% by mass or more and 85% by mass or less in composition analysis performed by an X-ray fluorescence method. Since ceria and/or zirconia function as a promoter, the alumina-based composite oxide is suitable as a catalyst support when the content of ceria and/or zirconia is 0.1% by mass or more. When the content of ceria and/or zirconia is 85% by mass or less, thermal degradation can be suppressed.

In a case where the alumina-based composite oxide contains ceria, the ceria content is preferably 1% by mass or more and 80% by mass or less in composition analysis performed by an X-ray fluorescence method.

The ceria content is more preferably 3% by mass or more, still more preferably 6% by mass or more. The ceria content is more preferably 75% by mass or less, still more preferably 70% by mass or less.

In a case where the alumina-based composite oxide contains zirconia, the zirconia content is preferably 1% by mass or more and 75% by mass or less in composition analysis performed by an X-ray fluorescence method.

The zirconia content is more preferably 5% by mass or more, still more preferably 10% by mass or more. The zirconia content is more preferably 70% by mass or less, still more preferably 65% by mass or less.

In a case where the alumina-based composite oxide contains both ceria and zirconia, the total content of alumina, ceria and zirconia is preferably 70% by mass or more and 98% by mass or less when the entire alumina-based composite oxide is taken as 100% by mass in composition analysis performed by an X-ray fluorescence method. By setting the total content of alumina, ceria and zirconia to be 70% by mass or more and 98% by mass or less, the alumina-based composite oxide can be more suitably used as a catalyst support.

In a case where the alumina-based composite oxide contains both ceria and zirconia, the total content of alumina, ceria and zirconia is more preferably 75% by mass or more, still more preferably 80% by mass or more when the entire alumina-based composite oxide is taken as 100% by mass in composition analysis performed by an X-ray fluorescence method. In a case where the alumina-based composite oxide contains both ceria and zirconia, the total content of alumina, ceria and zirconia is more preferably 97% by mass or less, still more preferably 96% by mass or less when the entire alumina-based composite oxide is taken as 100% by mass.

In a case where the alumina-based composite oxide contains ceria but does not contain zirconia, the total content of alumina and ceria is preferably 70% by mass or more and 96% by mass or less when the entire alumina-based composite oxide is taken as 100% by mass in composition analysis performed by an X-ray fluorescence method. By setting the total content of alumina and ceria to be 70% by mass or more and 96% by mass or less, the alumina-based composite oxide can be more suitably used as a catalyst support.

In a case where the alumina-based composite oxide contains ceria but does not contain zirconia, the total content of alumina and ceria is more preferably 75% by mass or more, still more preferably 80% by mass or more when the entire alumina-based composite oxide is taken as 100% by mass. In a case where the alumina-based composite oxide contains ceria but does not contain zirconia, the total content of alumina and ceria is more preferably 95% by mass or less, still more preferably 94% by mass or less when the entire alumina-based composite oxide is taken as 100% by mass.

In a case where the alumina-based composite oxide contains zirconia but does not contain ceria, the total content of alumina and zirconia is preferably 70% by mass or more and 96% by mass or less when the entire alumina-based composite oxide is taken as 100% by mass in composition analysis performed by an X-ray fluorescence method. By setting the total content of alumina and zirconia to be 70% by mass or more and 96% by mass or less, the alumina-based composite oxide can be more suitably used as a catalyst support.

In a case where the alumina-based composite oxide contains zirconia but does not contain ceria, the total content of alumina and zirconia is more preferably 75% by mass or more, still more preferably 80% by mass or more when the entire alumina-based composite oxide is taken as 100% by mass. In a case where the alumina-based composite oxide contains zirconia but does not contain ceria, the total content of alumina and zirconia is more preferably 95% by mass or less, still more preferably 94% by mass or less when the entire alumina-based composite oxide is taken as 100% by mass.

The alumina-based composite oxide preferably contains any one or more of oxides of rare earth elements (excluding cerium and promethium) as an oxide other than alumina, ceria, and zirconia. When oxides of rare earth elements other than cerium and promethium are contained, the aggregation of metal catalyst elements is further suppressed.

The alumina-based composite oxide preferably contains oxides of La, Nd, Pr, and Y among oxides of rare earth elements other than cerium and promethium. When the alumina-based composite oxide contains an oxide of La, Nd, Pr, or Y, the aggregation of metal catalyst elements is further suppressed.

In a case where oxides of rare earth elements other than cerium and promethium are contained, the content of the oxides of rare earth elements other than cerium and promethium is preferably 2% by mass or more and 20% by mass or less when the entire alumina-based composite oxide is taken as 100% by mass in composition analysis performed by an X-ray fluorescence method. When the content of oxides of rare earth elements other than cerium and promethium is 2% by mass or more and 20% by mass or less, the aggregation of metal catalyst elements is further suppressed.

The content of oxides of rare earth elements other than cerium and promethium is more preferably 3% by mass or more, still more preferably 4% by mass or more when the entire alumina-based composite oxide is taken as 100% by mass in composition analysis performed by an X-ray fluorescence method. The content of oxides of rare earth elements other than cerium and promethium is more preferably 18% by mass or less, still more preferably 16% by mass or less when the entire alumina-based composite oxide is taken as 100% by mass in composition analysis performed by an X-ray fluorescence method.

The alumina-based composite oxide may contain one or more selected from (A) an oxide of at least one element selected from the group consisting of In, Si, Sn, Bi, P, and Zn; (B) transition metal oxides (excluding oxides of rare earth elements); and (C) alkaline earth metal oxides. These components (A) to (C) are also referred to as "other oxides" below.

Examples of the transition metal oxides include oxides of one or more selected from the group consisting of Ti, V, Cr, Mn, Fe, Co, Ni, Cu, Nb, Mo, Ta and W. Examples of the alkaline earth metal oxide include oxides of one or more selected from the group consisting of Mg, Ca, Sr and Ba.

In a case where the alumina-based composite oxide contains the other oxides, the content of the other oxides is preferably 0.1% by mass or more and 30% by mass or less when the entire alumina-based composite oxide is taken as 100% by mass. The content of the other oxides is more preferably 0.3% by mass or more, still more preferably 0.5% by mass or more when the entire alumina-based composite oxide is taken as 100% by mass. The content of the other oxides is more preferably 25% by mass or less, still more preferably 20% by mass or less when the entire alumina-based composite oxide is taken as 100% by mass.

Preferable composition ratio of the alumina-based composite oxide includes the combination not exceeding 100% by mass in total (combination to be 100% by mass in total) exemplified below.
(1)
   Alumina; 40% or more and 80% or less
   Zirconia; 1% or more and 30% or less
   Ceria; 1% or more and 30% or less
   Oxides of rare earth elements (excluding cerium and promethium); 1% or more and 15% or less
   Other oxides; 0% or more and 10% or less
(2)
   Alumina; 20% or more and 60% or less
   Zirconia; 20% or more and 70% or less
   Ceria; 1% or more and 40% or less
   Oxides of rare earth elements (excluding cerium and promethium); 1% or more and 15% or less
   Other oxides; 0% or more and 10% or less
(3)
   Alumina; 20% or more and 60% or less
   Zirconia; 20% or more and 75% or less
   Ceria; 0% or more and 30% or less
   Oxides of rare earth elements (excluding cerium and promethium); 1% or more and 15% or less
   Other oxides; 0% or more and 10% or less
(4)
   Alumina; 20% or more and 60% or less
   Zirconia; 0% or more and 20% or less
   Ceria; 20% or more and 70% or less
   Oxides of rare earth elements (excluding cerium and promethium); 5% or more and 20% or less
   Other oxides; 0% or more and 20% or less
(5)
   Alumina; 20% or more and 60% or less
   Zirconia; 10% or more and 60% or less
   Ceria; 0% or more and 40% or less
   Oxides of rare earth elements (excluding cerium and promethium); 1% or more and 15% or less
   Other oxides; 1% or more and 20% or less

The use of the alumina-based composite oxide is not particularly limited, but is suitably a use as a catalyst support, and is particularly suitably a use as a catalyst support of a catalyst for exhaust gas purification (catalyst support for exhaust gas purification).

The metal catalyst element supported on the alumina-based composite oxide is not particularly limited, but is preferably, for example, Rh, Pt, Pd, Au, Ru, Ag, Ni, Co, Mn, Cu, and Fe.

The metal catalyst element supported on the alumina-based composite oxide may overlap with an element contained in the alumina-based composite oxide. For example, in a case where the alumina-based composite oxide contains Fe, Fe may be adopted as the metal catalyst element supported on the alumina-based composite oxide.

### [Method for producing alumina-based composite oxide]

Hereinafter, an example of the method for producing an alumina-based composite oxide will be described. However, the method for producing an alumina-based composite oxide of the present invention is not limited to the following exemplification.

The method for producing an alumina-based composite oxide according to the present embodiment is a method for producing an alumina-based composite oxide, which includes:
a step 1 of adding an acid to sodium aluminate to obtain a hydrated alumina suspension A;
a step 2 of preparing an aqueous solution B-1 of a raw material salt containing cerium and/or zirconium and/or a suspension B-2 of a raw material salt containing cerium and/or zirconium;
a step 3 of mixing the suspension A with the aqueous solution B-1 and/or the suspension B-2 to obtain a precipitate of an aluminum-based composite precursor; and
a step 4 of performing heat treatment on the precipitate to obtain an alumina-based composite oxide.

Hereinafter, each step of the method for producing an alumina-based composite oxide according to the present embodiment will be described.

### (1) Step 1

In step 1, an acid is added to sodium aluminate (NaAl(OH)₄) to obtain a hydrated alumina suspension A.

Sodium aluminate may be a liquid or a powder, but it is preferable to use liquid sodium aluminate in a case where a gaseous acid is used as the acid.

In a case where liquid sodium aluminate is used as sodium aluminate, the concentration of sodium aluminate is preferably 1% by mass or more and 20% by mass or less in terms of aluminum oxide.

The temperature of sodium aluminate is preferably 20°C or more and 90°C or less. The temperature of sodium aluminate is more preferably 25°C or more, still more preferably 30°C or more.

The temperature of sodium aluminate is more preferably 85°C or less, still more preferably 80°C or less.

By setting the temperature of sodium aluminate to be in the above range, it is likely to obtain an alumina-based composite oxide having element distribution that satisfies (1) to (8). Specifically, as the temperature of sodium aluminate is higher, the variation in element distribution tends to be larger in the range that satisfies (1) to (6).

The form of the acid added to sodium aluminate may be a gas or a liquid (solution). Specific examples of the acid include carbon dioxide, hydrochloric acid, nitric acid, sulfuric acid, and carboxylic acid. Among these, carbon dioxide gas is preferred from the viewpoint of fewer impurities.

In a case where carbon dioxide gas is blown into sodium aluminate, the flow rate when carbon dioxide gas is blown is preferably 1.7 × 10⁻⁷ m³/s or more and 1.7 × 10⁻⁵ m³/s or less, more preferably 5.0 × 10⁻⁷ m³/s or more and 5.0 × 10⁻⁶ m³/s or less.

In a case where carbon dioxide gas is blown into sodium aluminate, the time for blowing carbon dioxide gas is preferably 6 hours or more and 48 hours or less, more preferably 12 hours or more and 36 hours or less.

By blowing carbon dioxide gas into sodium aluminate under the above conditions, a suitable suspension A can be obtained.

### (2) Step 2

In step 2, an aqueous solution B-1 of a raw material salt containing cerium and/or zirconium and/or a suspension B-2 of a raw material salt containing cerium and/or zirconium is prepared. In step 2, only the aqueous solution B-1 of a raw material salt containing cerium and/or zirconium may be prepared, only the suspension B-2 of a raw material salt containing cerium and/or zirconium may be prepared, or both the aqueous solution B-1 of a raw material salt containing cerium and/or zirconium and the suspension B-2 of a raw material salt containing cerium and/or zirconium may be prepared.

The aqueous solution B-1 is obtained by mixing various raw material salts described below.

The suspension B-2 is obtained by subjecting the aqueous solution B-1 to heat treatment. The temperature for the heat treatment is preferably 140°C or more and 250°C or less, more preferably 160°C or more and 200°C or less. The time for the heat treatment is preferably 1 hour or more and 10 hours or less, more preferably 2 hours or more and 5 hours or less. When the suspension B-2 is used, the variation in element distribution tends to be larger in the range that satisfies (1) to (6) compared with the case of the aqueous solution B-1.

In a case where both the aqueous solution B-1 and the suspension B-2 are used, both the aqueous solution B-1 and the suspension B-2 may be prepared and mixed together for use.

Examples of the raw material salt containing cerium include at least one of cerium nitrate, cerium chloride, or cerium acetate. Among these, cerium nitrate that is a nitrate is preferred.

The raw material salt containing zirconium may be any salt that supplies zirconium ions, examples thereof include at least one of zirconium oxynitrate, zirconium oxychloride, or zirconium nitrate. Among these, zirconium oxynitrate that is a nitrate is preferred.

The aqueous solution B-1 and the suspension B-2 may contain a raw material salt containing a rare earth element (excluding cerium and promethium).

Examples of the rare earth element (excluding cerium and promethium) include at least one of Sc, Y, La, Nd, Pr, Sm, Eu, Gd, Tb, Dy, Ho, Er, Tm, or Lu. Among these, Y, La, Nd and Pr are preferred.

The aqueous solution B-1 and the suspension B-2 can contain one or more selected from (A) at least one element selected from the group consisting of In, Si, Sn, Bi, P, and Zn; (B) transition metal elements (excluding rare earth elements and precious metal elements); and (C) alkaline earth metal elements.

The raw materials for the rare earth elements, transition metal elements (excluding rare earth elements and precious metal elements), alkaline earth metals, and In, Si, Sn, Bi and P are not particularly limited as long as they are water-soluble. Examples thereof include nitrates, sulfates, acetates, chlorides, and bromides, but nitrate-based raw materials are preferred as the raw material salt since remaining of impurities can be suppressed. The purity of these raw materials is preferably 95% or more, more preferably 98% or more.

The solvent for preparing the aqueous solution B-1 may be appropriately selected depending on the kind of raw material salt, and the like, but usually, it is desirable to use water (pure water, ion-exchanged water or the like: the same applies below).

The metal salt concentration in the aqueous solution B-1 is preferably 1% or more and 15% or less in terms of oxide. By setting the metal salt concentration to 1% or more, the concentration can be increased to a certain degree, and the treatment time can be adjusted suitably. By setting the metal salt concentration to 15% or less, the increase in viscosity during neutralization can be suppressed, and the compounding can be performed suitably.

### (3) Step 3

In step 3, the suspension A is mixed with the aqueous solution B-1 and/or the suspension B-2 to obtain a precipitate of an aluminum-based composite precursor.

Specifically, in step 3, first, the suspension A obtained in step 1 is mixed with the aqueous solution B-1 and/or suspension B-2 obtained in step 2, and an alkali is added to obtain a precursor precipitate of an alumina-based composite oxide. There is no particular limitation on the mixing, but from the viewpoint of productivity such as filtration properties in the next step, it is preferable to add the aqueous solution B-1 and/or suspension B-2 prepared in step 2 to the suspension A prepared in step 1.

The alkali is not limited, and for example, ammonium hydroxide, ammonium bicarbonate, sodium hydroxide, potassium hydroxide, or the like can be used. Among these, sodium hydroxide is preferred from the viewpoint of industrial cost.

The amount of alkali added is not particularly limited as long as it is possible to produce a precursor precipitate of an alumina-based composite oxide as a salt precipitate. Usually, the alkali is added so that the pH of the solution is 8.0 or more and 11.0 or less, preferably 9.0 or more and 10.0 or less.

Next, the produced precipitate of the aluminum-based composite precursor is collected by a solid-liquid separation method. The solid-liquid separation method may be carried out, for example, according to known methods such as filtration, centrifugation, and decantation.

After collection, it is preferable to wash the obtained alumina-based composite hydroxide with water if necessary to remove the attached impurities.

The obtained alumina-based composite hydroxide may be further dried if necessary. The drying method may be carried out according to known methods, and may be, for example, any of natural drying or drying by heating. If necessary, pulverization treatment, classification treatment, and the like may be carried out after drying treatment.

### (4) Step 4

In step 4, heat treatment is performed on the precipitate (collected product) to obtain an alumina-based composite oxide.

The temperature for the heat treatment is not particularly limited, but the heat treatment is usually performed at 500°C or more and 1200°C or less for 2 hours or more and 10 hours or less. The atmosphere for the heat treatment is not particularly limited, but the heat treatment may be carried out in air or an oxidizing atmosphere.

The alumina-based composite oxide obtained by the heat treatment can be pulverized, if necessary. The pulverization is not particularly limited, but may be carried out using a general pulverizer such as a planetary mill, a ball mill, a hammer mill, or a jet mill.

In the method for producing an alumina-based composite oxide described above, it is possible to dispose precursors of ceria and zirconia on the surface and/or inside of hydrated alumina by mixing the hydrated alumina suspension A with the aqueous solution B-1 and/or suspension B-2 of a raw material salt containing cerium and/or zirconium. This makes it possible for alumina secondary particles containing ceria and zirconia to coexist with secondary particles of ceria and zirconia containing alumina in the tertiary particles of the alumina-based composite oxide. In addition, by controlling aggregation of hydrated alumina and the precursors of ceria and zirconia, it is possible to control the element distribution in the composite oxide tertiary particles.

By such a production method, it is possible to obtain an alumina-based composite oxide having the properties of (1) to (8).

### EXAMPLES

Hereinafter, the present invention will be described in detail with reference to Examples, but the present invention is not limited to the following Examples as long as the gist thereof is not deviated. The alumina-based composite oxide obtained in each of Examples and Comparative Examples contain hafnium oxide as an unavoidable impurity in an amount of 1 to 3 mass% based on zirconium oxide (calculated by the following Formula (X)). ([Mass of hafnium]/([mass of zirconium] + [mass of hafnium])) × 100 (%)

The maximum value and the minimum value of the content of each component shown in the following Examples should be considered as a preferable minimum value and a preferable maximum value of the present invention regardless of the content of other components.

In addition, the maximum value and the minimum value of the measured values shown in the following Examples should be considered to be the preferred minimum value and maximum value of the present invention regardless of the content (composition) of each component.

### [Fabrication of alumina-based composite oxide]

### (Example 1)

Sodium aluminate (Asada Chemical Industry, #2019, 78 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 8 g in terms of zirconium oxide), cerium(III) nitrate hexahydrate (FUJIFILM Wako Pure Chemical Corporation, special grade reagent, 8 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 1.

### (Example 2)

Sodium aluminate (Asada Chemical Industry, #2019, 78 g in terms of aluminum oxide) was diluted with ion-exchanged water to have a concentration of 5% in terms of oxide, then heated to 70°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 8 g in terms of zirconium oxide), cerium(III) nitrate hexahydrate (FUJIFILM Wako Pure Chemical Corporation, special grade reagent, 8 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 2.

### (Example 3)

Sodium aluminate (Asada Chemical Industry, #2019, 78 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 8 g in terms of zirconium oxide), cerium(III) nitrate hexahydrate (FUJIFILM Wako Pure Chemical Corporation, special grade reagent, 8 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution (aqueous solution B-1).

This aqueous solution B-1 was held in an autoclave at 180°C for 2 hours to prepare a composite metal salt suspension (suspension B-2).

The suspension A and the suspension B-2 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 3.

### (Example 4)

Sodium aluminate (Asada Chemical Industry, #2019, 69 g in terms of aluminum oxide) was diluted with ion-exchanged water to have a concentration of 5% in terms of oxide, then heated to 70°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 15 g in terms of zirconium oxide), cerium(III) nitrate hexahydrate (FUJIFILM Wako Pure Chemical Corporation, special grade reagent, 10 g in terms of cerium oxide), lanthanum nitrate hexahydrate (FUJIFILM Wako Pure Chemical Corporation, special grade reagent, 2 g in terms of lanthanum oxide), praseodymium(III) nitrate hexahydrate (FUJIFILM Wako Pure Chemical Corporation, special grade reagent, 2 g in terms of praseodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 4.

### (Example 5)

Sodium aluminate (Asada Chemical Industry, #2019, 54 g in terms of aluminum oxide) was diluted with ion-exchanged water to have a concentration of 5% in terms of oxide, then heated to 35°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 20 g in terms of zirconium oxide), cerium(III) nitrate hexahydrate (FUJIFILM Wako Pure Chemical Corporation, special grade reagent, 10 g in terms of cerium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 4 g in terms of neodymium oxide), praseodymium(III) nitrate hexahydrate (FUJIFILM Wako Pure Chemical Corporation, special grade reagent, 4 g in terms of praseodymium oxide), and yttrium(III) nitrate hexahydrate (FUJIFILM Wako Pure Chemical Corporation, special grade reagent,4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 5.

### (Example 6)

Sodium aluminate (Asada Chemical Industry, #2019, 54 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 20 g in terms of zirconium oxide), cerium(III) nitrate hexahydrate (FUJIFILM Wako Pure Chemical Corporation, special grade reagent, 10 g in terms of cerium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 4 g in terms of neodymium oxide), praseodymium(III) nitrate hexahydrate (FUJIFILM Wako Pure Chemical Corporation, special grade reagent, 4 g in terms of praseodymium oxide), and yttrium(III) nitrate hexahydrate (FUJIFILM Wako Pure Chemical Corporation, special grade reagent,4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 6.

### (Example 7)

Sodium aluminate (Asada Chemical Industry, #2019, 54 g in terms of aluminum oxide) was diluted with ion-exchanged water to have a concentration of 5% in terms of oxide, then heated to 70°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 20 g in terms of zirconium oxide), cerium(III) nitrate hexahydrate (FUJIFILM Wako Pure Chemical Corporation, special grade reagent, 10 g in terms of cerium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 4 g in terms of neodymium oxide), praseodymium(III) nitrate hexahydrate (FUJIFILM Wako Pure Chemical Corporation, special grade reagent, 4 g in terms of praseodymium oxide), and yttrium(III) nitrate hexahydrate (FUJIFILM Wako Pure Chemical Corporation, special grade reagent,4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 7.

### (Example 8)

Sodium aluminate (Asada Chemical Industry, #2019, 42 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 50 g in terms of zirconium oxide), lanthanum nitrate hexahydrate (FUJIFILM Wako Pure Chemical Corporation, special grade reagent, 4 g in terms of lanthanum oxide), and yttrium(III) nitrate hexahydrate (FUJIFILM Wako Pure Chemical Corporation, special grade reagent,4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 8.

### (Example 9)

Sodium aluminate (Asada Chemical Industry, #2019, 42 g in terms of aluminum oxide) was diluted with ion-exchanged water to have a concentration of 5% in terms of oxide, then heated to 70°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 50 g in terms of zirconium oxide), lanthanum nitrate hexahydrate (FUJIFILM Wako Pure Chemical Corporation, special grade reagent, 4 g in terms of lanthanum oxide), and yttrium(III) nitrate hexahydrate (FUJIFILM Wako Pure Chemical Corporation, special grade reagent,4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 9.

### (Example 10)

Sodium aluminate (Asada Chemical Industry, #2019, 42 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 50 g in terms of zirconium oxide), lanthanum nitrate hexahydrate (FUJIFILM Wako Pure Chemical Corporation, special grade reagent, 4 g in terms of lanthanum oxide), and yttrium(III) nitrate hexahydrate (FUJIFILM Wako Pure Chemical Corporation, special grade reagent,4 g in terms of yttrium oxide) were dissolved in ion-exchanged water to have a concentration of 5% in terms of oxide to prepare an aqueous nitrate solution (aqueous solution B-1).

This aqueous solution B-1 was held in an autoclave at 180°C for 2 hours to prepare a composite metal salt suspension (suspension B-2).

The suspension A and the suspension B-2 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 10.

### (Example 11)

Sodium aluminate (Asada Chemical Industry, #2019, 42 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Cerium(III) nitrate hexahydrate (FUJIFILM Wako Pure Chemical Corporation, special grade reagent, 50 g in terms of cerium oxide), lanthanum nitrate hexahydrate (FUJIFILM Wako Pure Chemical Corporation, special grade reagent, 4 g in terms of lanthanum oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 11.

### (Example 12)

Sodium aluminate (Asada Chemical Industry, #2019, 42 g in terms of aluminum oxide) was diluted with ion-exchanged water to have a concentration of 5% in terms of oxide, then heated to 70°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Cerium(III) nitrate hexahydrate (FUJIFILM Wako Pure Chemical Corporation, special grade reagent, 50 g in terms of cerium oxide), lanthanum nitrate hexahydrate (FUJIFILM Wako Pure Chemical Corporation, special grade reagent, 4 g in terms of lanthanum oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 12.

### (Example 13)

Sodium aluminate (Asada Chemical Industry, #2019, 42 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Diammonium cerium(IV) nitrate (FUJIFILM Wako Pure Chemical Corporation, special grade reagent, 50 g in terms of cerium oxide), lanthanum nitrate hexahydrate (FUJIFILM Wako Pure Chemical Corporation, special grade reagent, 4 g in terms of lanthanum oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution (aqueous solution B-1).

This aqueous solution B-1 was held in an autoclave at 180°C for 2 hours to prepare a composite metal salt suspension (suspension B-2).

The suspension A and the suspension B-2 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 13.

### (Example 14)

Sodium aluminate (Asada Chemical Industry, #2019, 30 g in terms of aluminum oxide) was diluted with ion-exchanged water to have a concentration of 5% in terms of oxide, then heated to 70°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 44 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 14.

### (Example 15)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 44 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution (aqueous solution B-1).

This aqueous solution B-1 was held in an autoclave at 180°C for 2 hours to prepare a composite metal salt suspension (suspension B-2).

The suspension A and the suspension B-2 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 15.

### (Example 16)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxychloride octahydrate (Mitsuwa Chemical Co., Ltd., special grade reagent, 44 g in terms of zirconium oxide) was dissolved in ion-exchanged water, and the acid concentration and the ZrO₂ concentration were then adjusted to 0.67 N and 4 wt/vol%, respectively, with 35% hydrochloric acid and ion-exchanged water. The temperature and pressure of the aqueous solution were adjusted to 120°C and 2 × 10⁵ Pa, respectively, using an autoclave reactor, 650 g of a 5% aqueous sodium sulfate solution was added, and the mixture was held for an additional 15 minutes. Thereafter, the mixture was allowed to cool to room temperature, thereby obtaining a basic zirconium sulfate-containing slurry.

Next, cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were added to the basic zirconium sulfate-containing slurry, a 25% aqueous sodium hydroxide solution was added until the pH reached 9, thereby preparing a composite metal salt suspension (suspension B). The suspension A and the suspension B were mixed to obtain a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 16.

### (Example 17)

Sodium aluminate (Asada Chemical Industry, #2019, 20 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 60 g in terms of zirconium oxide), cerium(III) nitrate hexahydrate (FUJIFILM Wako Pure Chemical Corporation, special grade reagent, 10 g in terms of cerium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 4 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 17.

### (Example 18)

Sodium aluminate (Asada Chemical Industry, #2019, 20 g in terms of aluminum oxide) was diluted with ion-exchanged water to have a concentration of 5% in terms of oxide, then heated to 70°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 60 g in terms of zirconium oxide), cerium(III) nitrate hexahydrate (FUJIFILM Wako Pure Chemical Corporation, special grade reagent, 10 g in terms of cerium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 4 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 18.

### (Example 19)

Sodium aluminate (Asada Chemical Industry, #2019, 20 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 70 g in terms of zirconium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 19.

### (Example 20)

Sodium aluminate (Asada Chemical Industry, #2019, 20 g in terms of aluminum oxide) was diluted with ion-exchanged water to have a concentration of 5% in terms of oxide, then heated to 70°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 70 g in terms of zirconium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 20.

### (Example 21)

Sodium aluminate (Asada Chemical Industry, #2019, 20 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 70 g in terms of zirconium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution (aqueous solution B-1).

This aqueous solution B-1 was held in an autoclave at 180°C for 2 hours to prepare a composite metal salt suspension (suspension B-2).

The suspension A and the suspension B-2 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 21.

### (Example 22)

Sodium aluminate (Asada Chemical Industry, #2019, 20 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Cerium(III) nitrate hexahydrate (FUJIFILM Wako Pure Chemical Corporation, special grade reagent, 70 g in terms of cerium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 22.

### (Example 23)

Sodium aluminate (Asada Chemical Industry, #2019, 20 g in terms of aluminum oxide) was diluted with ion-exchanged water to have a concentration of 5% in terms of oxide, then heated to 70°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Cerium(III) nitrate hexahydrate (FUJIFILM Wako Pure Chemical Corporation, special grade reagent, 70 g in terms of cerium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 23.

### (Example 24)

Sodium aluminate (Asada Chemical Industry, #2019, 15 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 59 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 24.

### (Example 25)

Sodium aluminate (Asada Chemical Industry, #2019, 15 g in terms of aluminum oxide) was diluted with ion-exchanged water to have a concentration of 5% in terms of oxide, then heated to 70°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 59 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 25.

### (Example 26)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 40 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), yttrium(III) nitrate hexahydrate (FUJIFILM Wako Pure Chemical Corporation, special grade reagent, 2 g in terms of yttrium oxide), and titanium tetrachloride (IV) (FUJIFILM Wako Pure Chemical Corporation, 4.0 g in terms of titanium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 26.

### (Example 27)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 40 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), yttrium(III) nitrate hexahydrate (FUJIFILM Wako Pure Chemical Corporation, special grade reagent, 2 g in terms of yttrium oxide), and monoammonium phosphate (FUJIFILM Wako Pure Chemical Corporation, special grade reagent, 4.0 g in terms of phosphate) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 27.

### (Example 28)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 40 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), yttrium(III) nitrate hexahydrate (FUJIFILM Wako Pure Chemical Corporation, special grade reagent, 2 g in terms of yttrium oxide), and fumed silica AEROSIL (Nihon Aerosil, 4.0 g in terms of silicon oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 28.

### (Example 29)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 40 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), yttrium(III) nitrate hexahydrate (FUJIFILM Wako Pure Chemical Corporation, special grade reagent, 2 g in terms of yttrium oxide), and ammonium metatungstate hydrate (FUJIFILM Wako Pure Chemical Corporation, 4.0g in terms of tungsten oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 29.

### (Example 30)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 40 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), yttrium(III) nitrate hexahydrate (FUJIFILM Wako Pure Chemical Corporation, special grade reagent, 2 g in terms of yttrium oxide), and magnesium nitrate hexahydrate (FUJIFILM Wako Pure Chemical Corporation, special grade reagent, 4.0 g in terms of magnesium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 30.

### (Example 31)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 40 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), yttrium(III) nitrate hexahydrate (FUJIFILM Wako Pure Chemical Corporation, special grade reagent, 2 g in terms of yttrium oxide), and calcium nitrate hexahydrate (FUJIFILM Wako Pure Chemical Corporation, special grade reagent, 4.0 g in terms of calcium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 31.

### (Example 32)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 40 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), yttrium(III) nitrate hexahydrate (FUJIFILM Wako Pure Chemical Corporation, special grade reagent, 2 g in terms of yttrium oxide), and strontium nitrate hexahydrate (FUJIFILM Wako Pure Chemical Corporation, special grade reagent, 4.0 g in terms of strontium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 32.

### (Example 33)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 40 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), yttrium(III) nitrate hexahydrate (FUJIFILM Wako Pure Chemical Corporation, special grade reagent, 2 g in terms of yttrium oxide), and barium nitrate hexahydrate (W FUJIFILM Wako Pure Chemical Corporation, special grade reagent, 4.0g in terms of barium oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 33.

### (Example 34)

Sodium aluminate (Asada Chemical Industry, #2019, 30 g in terms of aluminum oxide) was diluted with ion-exchanged water to have a concentration of 5% in terms of oxide, then heated to 50°C, and held while carbon dioxide gas was blown at a flow rate of 100 sccm (1.7 × 10⁻⁶ m³/s) for 24 hours using a gas injection tube equipped with a filter plate to prepare a hydrated alumina suspension (suspension A).

Zirconium oxynitrate (Mitsuwa Chemicals Co., Ltd., special grade reagent, 43 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), yttrium(III) nitrate hexahydrate (FUJIFILM Wako Pure Chemical Corporation, special grade reagent, 2 g in terms of yttrium oxide), and iron(III) nitrate 9-hydrate (FUJIFILM Wako Pure Chemical Corporation, special grade reagent, 1.0g in terms of iron oxide) were dissolved in ion-exchanged water to have a concentration of 5% in terms of oxide to prepare an aqueous nitrate solution (aqueous solution B-1).

The suspension A and the aqueous solution B-1 were mixed together, and an aqueous sodium hydroxide solution having a concentration of 25% by mass was added until the pH reached 9, thereby obtaining a precursor precipitate of an alumina-based composite oxide.

Next, the precursor precipitate was collected by solid-liquid separation and washed, and the solid was calcined using an electric furnace in air at 900°C for 5 hours to obtain an alumina-based composite oxide. The alumina-based composite oxide was pulverized using a hammer mill to obtain the alumina-based composite oxide according to Example 34.

### (Comparative Example 1)

Aluminum nitrate nonahydrate (Wako Pure Chemical Industries, special grade reagent, 78 g in terms of aluminum oxide), zirconium oxynitrate (Mitsuwa Chemical Co., Ltd., special grade reagent, 8 g in terms of zirconium oxide), cerium(III) nitrate hexahydrate (FUJIFILM Wako Pure Chemical Corporation, special grade reagent, 8 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 3% in terms of oxide to prepare an aqueous nitrate solution.

Next, 400 g of ammonium bicarbonate was dissolved in 7600 g of ion-exchanged water to prepare a 5% aqueous ammonium bicarbonate solution. Next, the aqueous nitrate solution was added to the aqueous ammonium bicarbonate solution to obtain a precursor precipitate of an alumina-based composite oxide.

The precipitate was then collected by solid-liquid separation and washed. The solid was calcined using an electric furnace in air at 900°C for 5 hours to obtain an alumina-based composite oxide. The alumina-based composite oxide was pulverized using a hammer mill to obtain the alumina-based composite oxide according to Comparative Example 1.

### (Comparative Example 2)

Zirconium oxynitrate (Mitsuwa Chemicals Co., Ltd., special grade reagent, 8 g in terms of zirconium oxide), cerium(III) nitrate hexahydrate (FUJIFILM Wako Pure Chemical Corporation, special grade reagent, 8 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 5% in terms of oxide to prepare an aqueous nitrate solution. The aqueous solution was held in an autoclave at 180°C for 2 hours, and an aqueous sodium hydroxide solution having a concentration of 25% by mass was then added until the pH reached 9, thereby obtaining a precursor precipitate of a ceria-zirconia-based composite oxide.

The precipitate was then collected by solid-liquid separation and washed. The solid was calcined using an electric furnace in air at 900°C for 5 hours to obtain a ceria-zirconia-based composite oxide. The ceria- and zirconia-based composite oxide was mixed with alumina (Sumitomo Chemical Co., Ltd., AKP-G07, 78 g in terms of aluminum oxide) and pulverized using a hammer mill, thereby obtaining an alumina-based composite oxide according to Comparative Example 2.

### (Comparative Example 3)

Aluminum nitrate nonahydrate (Wako Pure Chemical Industries, special grade reagent, 69 g in terms of aluminum oxide), zirconium oxynitrate (Mitsuwa Chemical Co., Ltd., special grade reagent, 15 g in terms of zirconium oxide), cerium(III) nitrate hexahydrate (FUJIFILM Wako Pure Chemical Corporation, special grade reagent, 10 g in terms of cerium oxide), lanthanum nitrate hexahydrate (FUJIFILM Wako Pure Chemical Corporation, special grade reagent, 2 g in terms of lanthanum oxide), praseodymium (III) nitrate hexahydrate (FUJIFILM Wako Pure Chemical Corporation, special grade reagent, 2 g in terms of praseodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 3% in terms of oxide to prepare an aqueous nitrate solution.

Next, 400 g of ammonium bicarbonate was dissolved in 7600 g of ion-exchanged water to prepare a 5% aqueous ammonium bicarbonate solution. Next, the aqueous nitrate solution was added to the aqueous ammonium bicarbonate solution to obtain a precursor precipitate of an alumina-based composite oxide.

The precipitate was then collected by solid-liquid separation and washed. The solid was calcined using an electric furnace in air at 900°C for 5 hours to obtain an alumina-based composite oxide. The alumina-based composite oxide was pulverized using a hammer mill to obtain the alumina-based composite oxide according to Comparative Example 3.

### (Comparative Example 4)

Aluminum nitrate nonahydrate (Wako Pure Chemical Industries, special grade reagent, 54 g in terms of aluminum oxide), zirconium oxynitrate (Mitsuwa Chemical Co., Ltd., special grade reagent, 20 g in terms of zirconium oxide), cerium(III) nitrate hexahydrate (FUJIFILM Wako Pure Chemical Corporation, special grade reagent, 10 g in terms of cerium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 4 g in terms of neodymium oxide), praseodymium (III) nitrate hexahydrate (FUJIFILM Wako Pure Chemical Corporation, special grade reagent, 4 g in terms of praseodymium oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 3% in terms of oxide to prepare an aqueous nitrate solution.

Next, 400 g of ammonium bicarbonate was dissolved in 7600 g of ion-exchanged water to prepare a 5% aqueous ammonium bicarbonate solution. Next, the aqueous nitrate solution was added to the aqueous ammonium bicarbonate solution to obtain a precursor precipitate of an alumina-based composite oxide.

The precipitate was then collected by solid-liquid separation and washed. The solid was calcined using an electric furnace in air at 900°C for 5 hours to obtain an alumina-based composite oxide. The alumina-based composite oxide was pulverized using a hammer mill to obtain the alumina-based composite oxide according to Comparative Example 4.

### (Comparative Example 5)

Aluminum nitrate nonahydrate (Wako Pure Chemical Industries, special grade reagent, 42 g in terms of aluminum oxide), zirconium oxynitrate (Mitsuwa Chemical Co., Ltd., special grade reagent, 50 g in terms of zirconium oxide), lanthanum nitrate hexahydrate (FUJIFILM Wako Pure Chemical Corporation, special grade reagent, 4 g in terms of lanthanum oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 3% in terms of oxide to prepare an aqueous nitrate solution.

Next, 400 g of ammonium bicarbonate was dissolved in 7600 g of ion-exchanged water to prepare a 5% aqueous ammonium bicarbonate solution. Next, the aqueous nitrate solution was added to the aqueous ammonium bicarbonate solution to obtain a precursor precipitate of an alumina-based composite oxide.

The precipitate was then collected by solid-liquid separation and washed. The solid was calcined using an electric furnace in air at 900°C for 5 hours to obtain an alumina-based composite oxide. The alumina-based composite oxide was pulverized using a hammer mill to obtain the alumina-based composite oxide according to Comparative Example 5.

### (Comparative Example 6)

Zirconium oxynitrate (Mitsuwa Chemicals Co., Ltd., special grade reagent, 50 g in terms of zirconium oxide), lanthanum nitrate hexahydrate (FUJIFILM Wako Pure Chemical Corporation, special grade reagent, 4 g in terms of lanthanum oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution. The aqueous solution was held in an autoclave at 180°C for 2 hours, and an aqueous sodium hydroxide solution having a concentration of 25% by mass was then added until the pH reached 9, thereby obtaining a precursor precipitate of a ceria-zirconia-based composite oxide.

The precipitate was then collected by solid-liquid separation and washed. The solid was calcined using an electric furnace in air at 900°C for 5 hours to obtain a ceria-zirconia-based composite oxide. The ceria- and zirconia-based composite oxide was mixed with alumina (Sumitomo Chemical Co., Ltd., AKP-G07, 42 g in terms of aluminum oxide) and pulverized using a hammer mill, thereby obtaining an alumina-based composite oxide according to Comparative Example 6.

### (Comparative Example 7)

Aluminum nitrate nonahydrate (Wako Pure Chemical Industries, special grade reagent, 42 g in terms of aluminum oxide), cerium(III) nitrate hexahydrate (FUJIFILM Wako Pure Chemical Corporation, special grade reagent, 50 g in terms of cerium oxide), lanthanum nitrate hexahydrate (FUJIFILM Wako Pure Chemical Corporation, special grade reagent, 4 g in terms of lanthanum oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 3% in terms of oxide to prepare an aqueous nitrate solution.

Next, 400 g of ammonium bicarbonate was dissolved in 7600 g of ion-exchanged water to prepare a 5% aqueous ammonium bicarbonate solution. Next, the aqueous nitrate solution was added to the aqueous ammonium bicarbonate solution to obtain a precursor precipitate of an alumina-based composite oxide.

The precipitate was then collected by solid-liquid separation and washed. The solid was calcined using an electric furnace in air at 900°C for 5 hours to obtain an alumina-based composite oxide. The alumina-based composite oxide was pulverized using a hammer mill to obtain the alumina-based composite oxide according to Comparative Example 7.

### (Comparative Example 8)

Diammonium cerium(IV) nitrate (FUJIFILM Wako Pure Chemical Corporation, special grade reagent, 50 g in terms of cerium oxide), lanthanum nitrate hexahydrate (FUJIFILM Wako Pure Chemical Corporation, special grade reagent, 4 g in terms of lanthanum oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution. The aqueous solution was held in an autoclave at 180°C for 2 hours, and an aqueous sodium hydroxide solution having a concentration of 25% by mass was then added until the pH reached 9, thereby obtaining a precursor precipitate of a ceria-zirconia-based composite oxide.

The precipitate was then collected by solid-liquid separation and washed. The solid was calcined using an electric furnace in air at 900°C for 5 hours to obtain a ceria-zirconia-based composite oxide. The ceria- and zirconia-based composite oxide was mixed with alumina (Sumitomo Chemical Co., Ltd., AKP-G07, 42 g in terms of aluminum oxide) and pulverized using a hammer mill, thereby obtaining an alumina-based composite oxide according to Comparative Example 8.

### (Comparative Example 9)

Aluminum nitrate nonahydrate (Wako Pure Chemical Industries, special grade reagent, 30 g in terms of aluminum oxide), zirconium oxynitrate (Mitsuwa Chemical Co., Ltd., special grade reagent, 44 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water to have a concentration of 3% in terms of oxide to prepare an aqueous nitrate solution.

Next, 400 g of ammonium bicarbonate was dissolved in 7600 g of ion-exchanged water to prepare a 5% aqueous ammonium bicarbonate solution. Next, the aqueous nitrate solution was added to the aqueous ammonium bicarbonate solution to obtain a precursor precipitate of an alumina-based composite oxide.

The precipitate was then collected by solid-liquid separation and washed. The solid was calcined using an electric furnace in air at 900°C for 5 hours to obtain an alumina-based composite oxide. The alumina-based composite oxide was pulverized using a hammer mill to obtain the alumina-based composite oxide according to Comparative Example 9.

### (Comparative Example 10)

Zirconium oxychloride octahydrate (Mitsuwa Chemical Co., Ltd., special grade reagent, 44 g in terms of zirconium oxide) was dissolved in ion-exchanged water, and the acid concentration and the ZrO₂ concentration were then adjusted to 0.67 N and 4 wt/vol%, respectively, with 35% hydrochloric acid and ion-exchanged water. The temperature and pressure of the aqueous solution were adjusted to 120°C and 2 × 10⁵ Pa, respectively, using an autoclave reactor, 650 g of a 5% aqueous sodium sulfate solution was added, and the mixture was held for an additional 15 minutes. Thereafter, the mixture was allowed to cool to room temperature, thereby obtaining a basic zirconium sulfate-containing slurry.

Next, cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were added to the basic zirconium sulfate-containing slurry, a 25% aqueous sodium hydroxide solution was added until the pH reached 13 to obtain a precipitate. The precipitate was collected by solid-liquid separation and washed.

The solid was calcined using an electric furnace in air at 900°C for 5 hours to obtain a ceria-zirconia-based composite oxide. The ceria- and zirconia-based composite oxide was mixed with alumina (Sumitomo Chemical Co., Ltd., AKP-G07, 30 g in terms of aluminum oxide) and pulverized using a hammer mill, thereby obtaining an alumina-based composite oxide according to Comparative Example 10.

### (Comparative Example 11)

Zirconium oxynitrate (Mitsuwa Chemicals Co., Ltd., special grade reagent, 44 g in terms of zirconium oxide), cerium(III) nitrate hexahydrate (FUJIFILM Wako Pure Chemical Corporation, special grade reagent, 20 g in terms of cerium oxide), lanthanum nitrate hexahydrate (FUJIFILM Wako Pure Chemical Corporation, special grade reagent, 2 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 2 g in terms of yttrium oxide) were dissolved in ion-exchanged water, hydrogen peroxide solution was added in an amount to be 1.2 times by mole the amount of cerium in cerium nitrate, and the mixture was stirred to obtain a raw material solution. This aqueous solution was added to ammonia water in an amount to be 1.2 times the neutralization equivalent amount for the metal cations while stirring was performed, to obtain a precursor precipitate of a ceria-zirconia-based composite oxide. Next, the precipitate was subjected to centrifugation, thoroughly washed, then dried in air in a temperature environment of 150°C for 7 hours, and then subjected to preliminary calcination at 330°C for 5 hours to obtain a green compact. The green compact was pulverized using a pulverizer and then calcined in air at 800°C for 5 hours to obtain a ceria-zirconia-based composite oxide.

Aluminum nitrate nonahydrate (FUJIFILM Wako Pure Chemical Corporation, special grade reagent, 30 g in terms of aluminum oxide) was dissolved in ion-exchanged water. The ceria- and zirconia-based composite oxide was suspended in the aqueous aluminum nitrate solution and stirred for 3 hours. The suspension was further heated while being stirred to evaporate water. The remaining solid was held in air at 110°C for 40 hours, and then calcined at 800°C for 5 hours to obtain an alumina-based composite oxide according to Comparative Example 11.

### (Comparative Example 12)

Aluminum nitrate nonahydrate (Wako Pure Chemical Industries, special grade reagent, 20 g in terms of aluminum oxide), zirconium oxynitrate (Mitsuwa Chemical Co., Ltd., special grade reagent, 60 g in terms of zirconium oxide), cerium(III) nitrate hexahydrate (FUJIFILM Wako Pure Chemical Corporation, special grade reagent, 10 g in terms of cerium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 3% in terms of oxide to prepare an aqueous nitrate solution.

Next, 400 g of ammonium bicarbonate was dissolved in 7600 g of ion-exchanged water to prepare a 5% aqueous ammonium bicarbonate solution. Next, the aqueous nitrate solution was added to the aqueous ammonium bicarbonate solution to obtain a precursor precipitate of an alumina-based composite oxide.

The precipitate was then collected by solid-liquid separation and washed. The solid was calcined using an electric furnace in air at 900°C for 5 hours to obtain an alumina-based composite oxide. The alumina-based composite oxide was pulverized using a hammer mill to obtain the alumina-based composite oxide according to Comparative Example 12.

### (Comparative Example 13)

Aluminum nitrate nonahydrate (Wako Pure Chemical Industries, special grade reagent, 20 g in terms of aluminum oxide), zirconium oxynitrate (Mitsuwa Chemical Co., Ltd., special grade reagent, 70 g in terms of zirconium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 3% in terms of oxide to prepare an aqueous nitrate solution.

Next, 400 g of ammonium bicarbonate was dissolved in 7600 g of ion-exchanged water to prepare a 5% aqueous ammonium bicarbonate solution. Next, the aqueous nitrate solution was added to the aqueous ammonium bicarbonate solution to obtain a precursor precipitate of an alumina-based composite oxide.

The precipitate was then collected by solid-liquid separation and washed. The solid was calcined using an electric furnace in air at 900°C for 5 hours to obtain an alumina-based composite oxide. The alumina-based composite oxide was pulverized using a hammer mill to obtain the alumina-based composite oxide according to Comparative Example 13.

### (Comparative Example 14)

Zirconium oxynitrate (Mitsuwa Chemicals Co., Ltd., special grade reagent, 70 g in terms of zirconium oxide), lanthanum nitrate hexahydrate (FUJIFILM Wako Pure Chemical Corporation, special grade reagent, 4 g in terms of lanthanum oxide), neodymium(III) nitrate hexahydrate (FUJIFILM Wako Pure Chemical Corporation, special grade reagent, 2 g in terms of neodymium oxide), and yttrium(III) nitrate hexahydrate (FUJIFILM Wako Pure Chemical Corporation, special grade reagent, 4 g in terms of yttrium oxide) were dissolved in ion-exchanged water to have a concentration of 5% in terms of oxide to prepare an aqueous nitrate solution. The aqueous solution was held in an autoclave at 180°C for 2 hours, and an aqueous sodium hydroxide solution having a concentration of 25% by mass was then added until the pH reached 9, thereby obtaining a precursor precipitate of a ceria-zirconia-based composite oxide.

The precipitate was then collected by solid-liquid separation and washed. The solid was calcined using an electric furnace in air at 900°C for 5 hours to obtain a ceria-zirconia-based composite oxide. The ceria- and zirconia-based composite oxide was mixed with alumina (Sumitomo Chemical Co., Ltd., AKP-G07, 20 g in terms of aluminum oxide) and pulverized using a hammer mill, thereby obtaining an alumina-based composite oxide according to Comparative Example 14.

### (Comparative Example 15)

Into a tank being stirred, 34.7 kg of deionized water, 10.95 kg of an aluminum sulfate solution containing alumina (Al₂O₃) at a concentration of 8.31% by weight, 1.43 kg of a lanthanum nitrate solution containing La₂O₃ at a concentration of 26.9% by weight, and 4.97 kg of an aqueous nitric acid solution at a concentration of 68% by weight were added to prepare a solution (A). The solution (B) is a sodium aluminate solution containing alumina (Al₂O₃) at a concentration of 24.9% by weight.

Into a reactor being stirred (250 rpm, a spindle having four blades inclined at 45°), 71 kg of deionized water was added. The reactor was then heated until the temperature reached 65°C. This temperature was maintained throughout the reaction. A 69% nitric acid solution was added into the reactor being stirred until the pH reached 3.

The solution (A) and the solution (B) were simultaneously added into the reactor being stirred via inlet tubes near the stirring spindle. The solution (A) was added at a flow rate of 1.05 kg/min. The solution (B) was added at a flow rate at which the pH could reach 5 in 3 minutes. The flow rate of the solution (A) remained constant at 1.05 kg/min, and the flow rate of the solution (B) was adjusted to maintain the pH at a value of 5.1 for 46 minutes.

The introduction of the solution (A) was stopped, and the solution (B) was continuously added until the pH reached 10 in 15 minutes. The reaction slurry was then poured onto a vacuum filter. At the end of the filtration, the cake was washed with deionized water at 60°C. Thereafter, the cake was redispersed in deionized water to obtain a suspension containing oxides (Al₂O₃-La₂O₃) at a concentration of 8% by weight. The suspension was spray dried to obtain a dried lanthanum-doped aluminum hydrate powder (aluminum hydrate 1).

Into a tank being stirred using a spindle having four blades inclined at 45°, 357 g of water, 114 g of zirconyl nitrate solution (21 g in terms of zirconium oxide), 56 g of Ce^{III} nitrate solution (16.2 g in terms of cerium oxide), 4.4 g of lanthanum nitrate solution (1.2 g in terms of lanthanum oxide), and 16 g of yttrium nitrate solution (2.4 g in terms of yttrium oxide) were added to prepare a solution containing a nitrate of a precursor as a main component. Next, 2.3 g of 69% by weight nitric acid was added to the obtained solution to obtain a precursor solution. While stirring was performed, 28 g of aluminum hydrate 1 containing alumina (18 g of Al₂O₃) corresponding 64.5% by weight and 4.2% by weight La₂O₃ (1.17 g) was added. The precursor mixture was stirred until the mixture was obtained in the form of a homogeneous dispersion. Next, 5.3 g of a 9.8 mol/L aqueous hydrogen peroxide solution was added. The precursor mixture was continuously stirred.

The precursor mixture was added into a reactor, which contained 500 mL of 2 mol/L ammonia solution and was stirred (575 rpm) using a spindle having four blades inclined at 45°, at ambient temperature for 60 minutes. At the end of the addition of the precursor mixture, the mixture was heated to a temperature of 95°C and maintained at this temperature for 30 minutes. The mixture was then cooled to a temperature of less than 40°C. To this cooled mixture, 12 g of lauric acid was added while stirring was performed at 650 rpm. The stirring was maintained for 30 minutes.

The mixture was filtered in a vacuum, and the cake was then washed with 720 g of aqueous ammonia solution at a pH of 9. The obtained wet cake was then placed in a muffle furnace. The furnace temperature was increased at a rate of 4°C/min until the temperature reached 950°C, and this temperature was then maintained for 4 hours. At the end of this calcination in air, a mixed oxide was obtained. The collected mixed oxide was then pulverized using a mortar. This was used as the alumina-based composite oxide according to Comparative Example 15.

### (Comparative Example 16)

Into a tank being stirred, 34.7 kg of deionized water, 10.95 kg of an aluminum sulfate solution containing alumina (Al₂O₃) at a concentration of 8.31% by weight, 1.43 kg of a lanthanum nitrate solution containing La₂O₃ at a concentration of 26.9% by weight, and 4.96 kg of aqueous nitric acid solution at a concentration of 68% by weight were added to prepare a solution (A). The solution (B) is a sodium aluminate solution containing alumina at a concentration of 24.9% by weight.

Into a reactor being stirred (250 rpm, a spindle having four blades inclined at 45°), 71 kg of deionized water was added. The reactor was then heated until the temperature reached 65°C. This temperature was maintained throughout the reaction. A 69% nitric acid solution was added into the reactor being stirred until the pH reached 3.

The solution (A) and the solution (B) were simultaneously added into the reactor being stirred via inlet tubes near the stirring spindle. The solution (A) was added at a flow rate of 1.05 kg/min. The solution (B) was added at a flow rate at which the pH could reach 4.4 in 3 minutes. The flow rate of the solution (A) remained constant at 1.05 kg/min, and the flow rate of the solution (B) was adjusted to maintain the pH at a value of 4.4 for 46 minutes.

The introduction of the solution (A) was stopped, and the solution (B) was continuously added until the pH reached 10 in 15 minutes. The reaction slurry was then poured onto a vacuum filter. At the end of the filtration, the cake was washed with deionized water at 60°C. Thereafter, the cake was redispersed in deionized water to obtain a suspension containing oxides (A₁₂O₃-La₂O₃) at a concentration of 8% by weight. The suspension was spray dried to obtain a dried lanthanum-doped aluminum hydrate powder (aluminum hydrate 2).

Into a tank being stirred using a spindle having four blades inclined at 45°, 357 g of water, 114 g of zirconyl nitrate solution (21 g in terms of zirconium oxide), 56 g of Ce^{III} nitrate solution (16.2 g in terms of cerium oxide), 4.4 g of lanthanum nitrate solution (1.2 g in terms of lanthanum oxide), and 16 g of yttrium nitrate solution (2.4 g in terms of yttrium oxide) were added to prepare a solution containing a nitrate of a precursor as a main component. Next, 2.3 g of 69% by weight nitric acid was added to the obtained solution to obtain a precursor solution. While stirring was performed, 31.1 g of aluminum hydrate 2 containing alumina (18 g of Al₂O₃) corresponding 57.8% by weight and 3.8% by weight La₂O₃ (1.18 g) was added. The precursor mixture was stirred until the mixture was obtained in the form of a homogeneous dispersion. Next, 5.3 g of a 9.8 mol/L aqueous hydrogen peroxide solution was added. The precursor mixture was continuously stirred.

Into a reactor being stirred (600 rpm, a spindle having four blades inclined at 45°), 500 mL of 2 mol/L ammonia solution was added. The precursor mixture was added into a reactor being stirred for 60 minutes. This process was carried out at ambient temperature. At the end of the addition of the precursor mixture, the mixture was heated to a temperature of 95°C and maintained at this temperature for 30 minutes. The reaction medium was then cooled to a temperature of less than 40°C. To this cooled mixture, 12 g of lauric acid was added while stirring was performed at 500 rpm. The stirring was maintained for 30 minutes.

The reaction medium was filtered in a vacuum, and the cake was then washed with 1 L of aqueous ammonia solution (pH = 9). The obtained wet cake was then placed in a muffle furnace. The furnace temperature was increased at a rate of 4°C/min until the temperature reached 950°C, and this temperature was then maintained for 4 hours. At the end of this calcination in air, a mixed oxide was obtained. The collected mixed oxide was then pulverized using a mortar. This was used as the alumina-based composite oxide according to Comparative Example 16.

### [Composition measurement]

The composition (in terms of oxide) of the alumina-based composite oxide of each of Examples and Comparative Examples was analyzed using a wavelength-dispersive X-ray fluorescence spectrometer ("ZSX Primus II" manufactured by Rigaku Corporation). The results are shown in Tables 1 to 6.

### [Point analysis by energy dispersive X-ray spectroscopy]

The alumina-based composite oxides of Examples and Comparative Examples were subjected to point analysis by energy dispersive X-ray spectroscopy. Specifically, first, the sample was embedded in resin and the surface was polished. After that, point analysis of a total of 50 points was conducted according to the following procedures a to c.

### <procedures>

a: Among particle images observed under a scanning electron microscope (JSM-6700F manufactured by JEOL, Ltd.), one particle image having a cross section of 4 µm or more in length and 4 µm or more in width was selected.
b: The composition analysis was performed at 25 measurement points spaced 1 µm apart in an area of 4 µm in length and 4 µm in width on the selected particle image.
c: Another particle image different from the one selected in the procedure a was selected, and the same composition analysis as in the procedure b was performed.

The 50 measured points were classified as follows, and the respective numbers of points were summarized in a table. The results are shown in Tables 1 to 6.

Among Comparative Examples, there were examples in which the particles had a core-shell structure. In the case of this example, the region in the particle image extending from the edge of the particle to the center of the particle by 1 µm or more was regarded as the core portion (particle part), and point analysis was performed.

### <Classification>

· Number of points having alumina content of less than 1% by mass
· Number of measurement points having alumina content of 1% by mass or more and less than 50% by mass and content of element oxides other than alumina of more than 50% by mass and 99% by mass or less
· Number of measurement points having alumina content of 50% by mass or more and 99% by mass or less and content of element oxides other than alumina of 1% by mass or more and 50% by mass or less
· Number of points having alumina content of more than 99% by mass
· Number of measurement points having alumina content of 1% by mass or more and 45% by mass or less and content of element oxides other than alumina of 55% by mass or more and 99% by mass or less
· Number of measurement points having alumina content of 55% by mass or more and 99% by mass or less and content of element oxides other than alumina of 1% by mass or more and 45% by mass or less
· Number of measurement points having alumina content of 1% by mass or more and 40% by mass or less and content of element oxides other than alumina of 60% by mass or more and 99% by mass or less
· Number of measurement points having alumina content of 60% by mass or more and 99% by mass or less and content of element oxides other than alumina of 1% by mass or more and 40% by mass or less

The maximum value, minimum value, and difference between the maximum and minimum values of the alumina content at the 50 measurement points are also shown in Tables 1 to 6.

The maximum value, minimum value, and difference between the maximum and minimum values of the content of element oxides other than alumina at the 50 measurement points are also shown in Tables 1 to 6.

### [Measurement of pore volume]

The nitrogen adsorption and desorption isotherms of the alumina-based composite oxides of Examples and Comparative Examples were acquired using a pore distribution measuring device ("BELSOAP Mini II" manufactured by MicrotracBEL Corp.), and then the pore distribution was calculated from the desorption process using the BJH method. The measurement conditions were as follows. Thereafter, the pore volume was determined over the entire range of the pore diameter distribution (pore diameter of 3 nm or more and less than 200 nm). The results are shown in a table.

### <Measurement conditions>

Measuring device: Pore distribution measuring device (BELSOAP Mini II manufactured by MicrotracBEL Corp.)
Measuring range: Pe/P0 = 0 to 1
Adsorption temperature: 77 K
Number of measurement points: 10 points on adsorption side and 25 points on desorption side

### [Measurement of Rh particle diameter (catalyst particle diameter)]

The alumina-based composite oxide of each of Examples and Comparative Examples was impregnated with an 8% Rh nitrate solution at 2% by weight in terms of Rh, drying was performed at 100°C, and then calcination was performed at 500°C for 5 hours to obtain a Rh-supported powder. Next, heat treatment was performed in air at 1200°C for 12 hours to obtain a sample subjected to heat treatment. This sample was weighed by 0.2 g and placed in a cell, and the Rh particle diameter was measured by the CO pulse method using a BELCAT B manufactured by MicrotracBEL Corp.. The results are shown in Tables 1 to 6.

As can be seen from Tables 1 to 6, in a case where the alumina-based composite oxides of Examples were used, the aggregation of Rh (catalyst metal element) was suppressed.

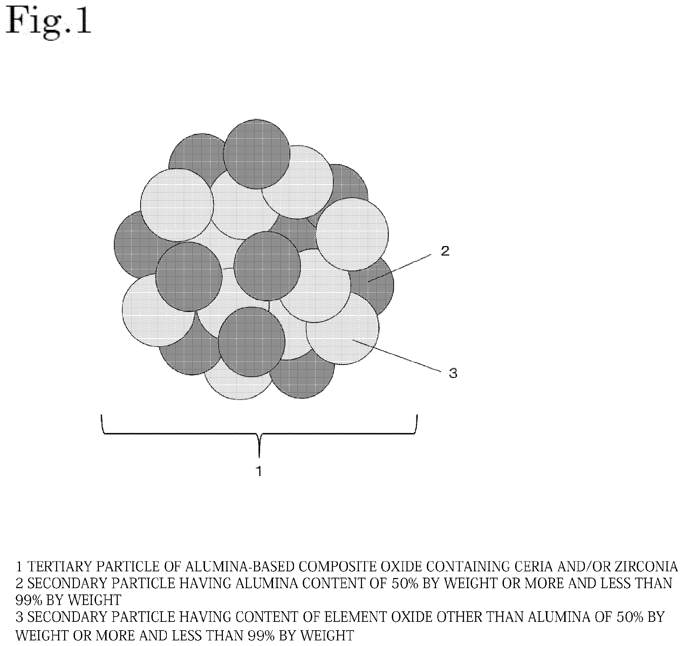

Here, for ease of understanding, model diagrams of tertiary particles of the alumina-based composite oxides of Examples and tertiary particles of alumina-based composite oxides of Comparative Examples are illustrated in Figs. 1 to 4.

As illustrated in Fig. 1, the alumina-based composite oxides 1 of Examples 1 to 34 are in the form of tertiary particles and composed of two kinds of secondary particles different in element distributions, that is,
secondary particles 2 having an alumina content of 50% by mass or more and 99% by mass or less (secondary particles 2 having a content of element oxides other than alumina of 1% by mass or more and 50% by mass or less); and
secondary particles 3 having a content of element oxides other than alumina of more than 50% by mass and 99% by mass or less (secondary particles 3 having an alumina content of 1% by mass or more and less than 50% by mass).

Therefore, aggregation of the catalyst metal element is suppressed when exposed to a high temperature region for a long period of time as well.

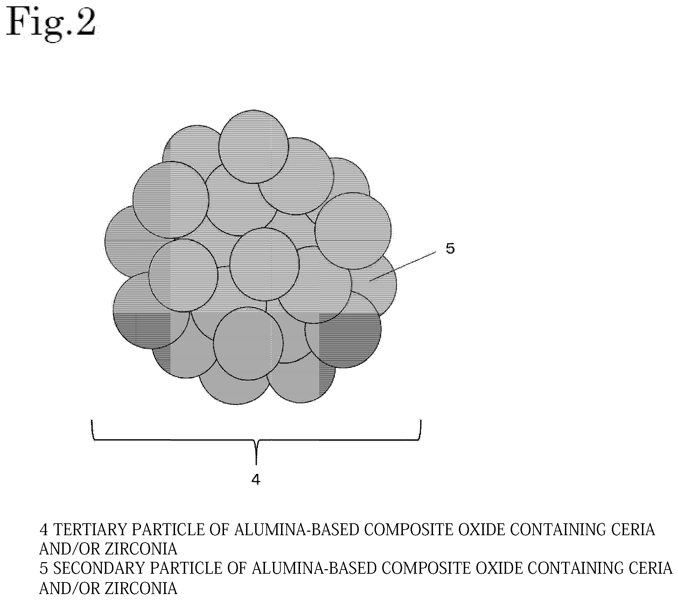

As illustrated in Fig. 2, the alumina-based composite oxides 4 of Comparative Examples 1, 3 to 5, 7, 9, 12, and 13 are in the form of tertiary particles, but are composed only of secondary particles 5 having little bias in element distribution with respect to each other. In other words, in the alumina-based composite oxides 4 of Comparative Examples 1, 3 to 5, 7, 9, 12, and 13, the difference between the maximum and minimum values of the alumina content among the secondary particles is small. Therefore, the catalyst metal elements are aggregated when exposed to a high temperature region for a long period of time.

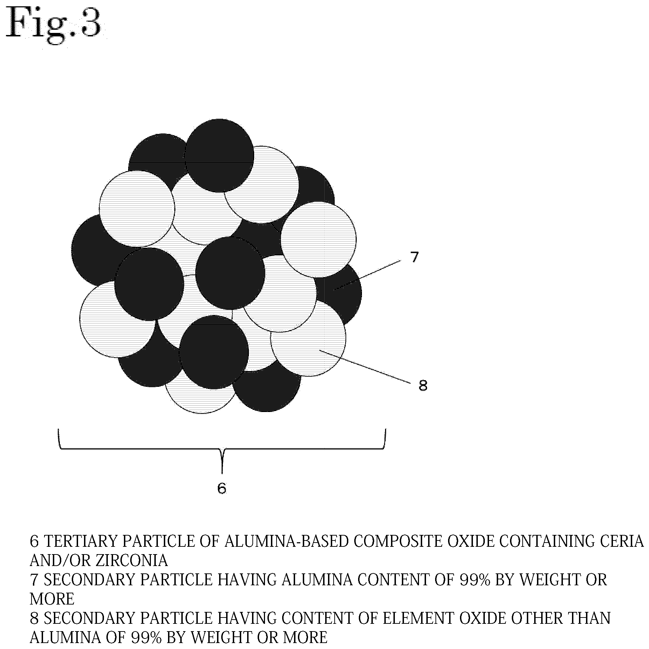

As illustrated in Fig. 3, the alumina-based composite oxides 6 of Comparative Examples 2, 6, 8, 10, and 14 are in the form of tertiary particles, but are composed of secondary particles 7 and 8 which have a significantly large bias in element distribution with respect to each other. In the alumina-based composite oxides 4 of Comparative Examples 2, 6, 8, 10, and 14, the difference between the maximum and minimum values of the alumina content among the secondary particles is significantly large. In other words, the alumina-based composite oxides 6 of Comparative Examples 2, 6, 8, 10, and 14 are tertiary particles that are a mixture of alumina particles and element oxides other than alumina, and have element distribution in which it is difficult to exert the properties due to the compounding of alumina with element oxides other than alumina. Therefore, the catalyst metal elements are aggregated when exposed to a high temperature region for a long period of time.

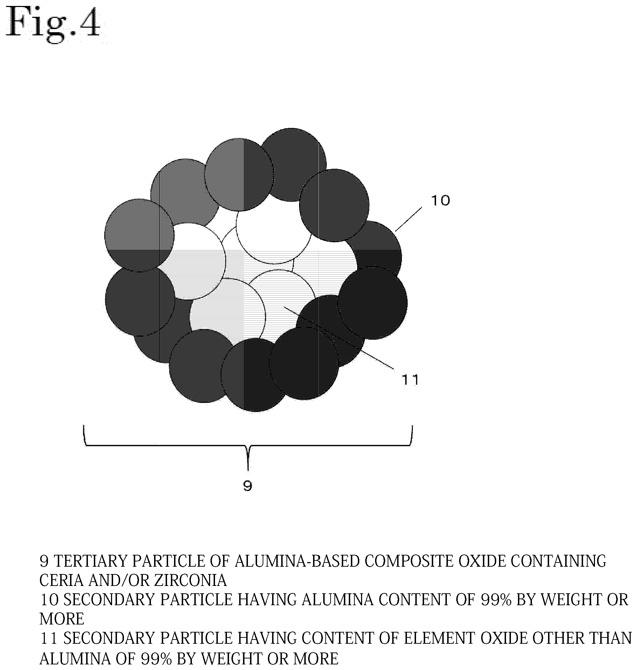

As illustrated in Fig. 4, the alumina-based composite oxide 9 of Comparative Example 11 is in the form of tertiary particles, and is composed of secondary particles 10 constituting the shell portion and secondary particles 11 constituting the core portion.

The secondary particles 10 and 11 are composed of the secondary particles 7 and 8, which have a significantly large bias in element distribution with respect to each other. In other words, the alumina-based composite oxide 9 of Comparative Example 11 is a tertiary particle as a mixture of alumina particles and element oxides other than alumina, and has element distribution in which it is difficult to exert the properties due to the compounding of alumina with element oxides other than alumina. Therefore, the catalyst metal elements are aggregated when exposed to a high temperature region for a long period of time.

### [Measurement of particle diameters D₅₀ and D₉₀]

In a 50 ml beaker, 0.15 g of the alumina-based composite oxide of each of Examples and Comparative Examples and 40 ml of a 0.2% aqueous sodium hexametaphosphate solution were placed and dispersed using an ultrasonic homogenizer "Sonifier S-450D" (Emerson Japan, Ltd.) for 2 minutes, and then the resultant was placed in a device (laser diffraction-type particle size distribution measuring device (LA-950 manufactured by HORIBA, Ltd.)) for measurement. The results are shown in Table 1.

### [X-ray diffraction spectrum]

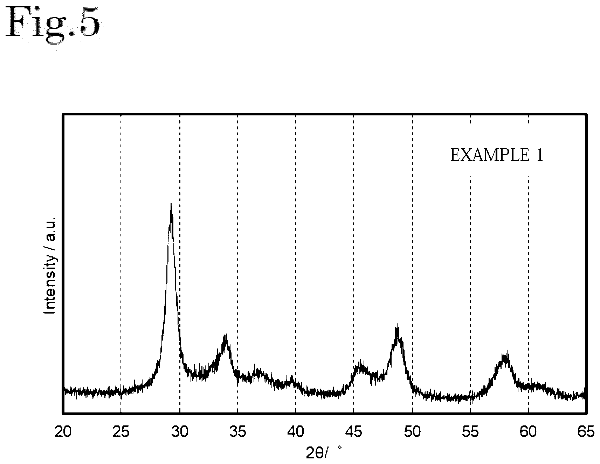

The X-ray diffraction spectrum of the alumina-based composite oxide of Example 1 was acquired using an X-ray diffractometer ("Ultima IV" manufactured by Rigaku Corporation). The measurement conditions were as follows. The results are illustrated in Fig. 5.

### <Measurement conditions>

Measuring device: X-ray diffractometer (Ultima IV manufactured by Rigaku Corporation)
Radiation source: CuKα radiation source
Tube voltage: 50 kV
Tube current: 30 mA
Scanning speed: 2θ = 20° to 65°: 4°/min

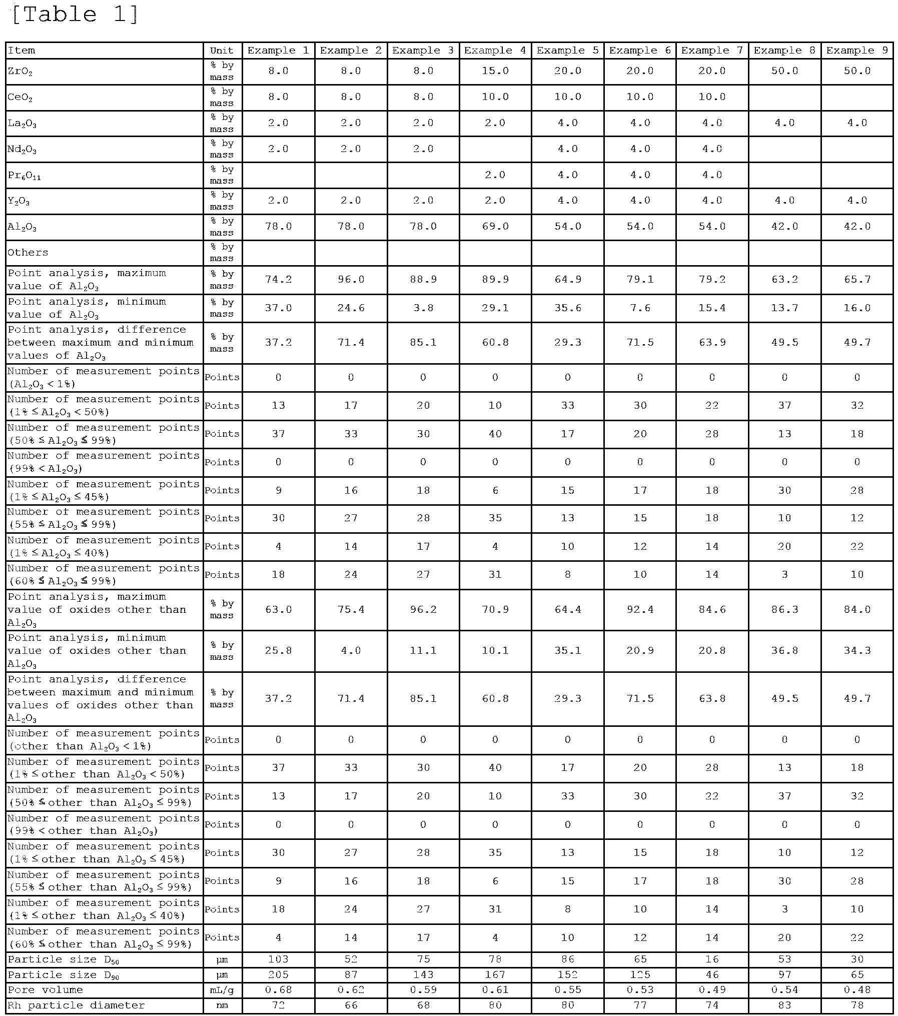

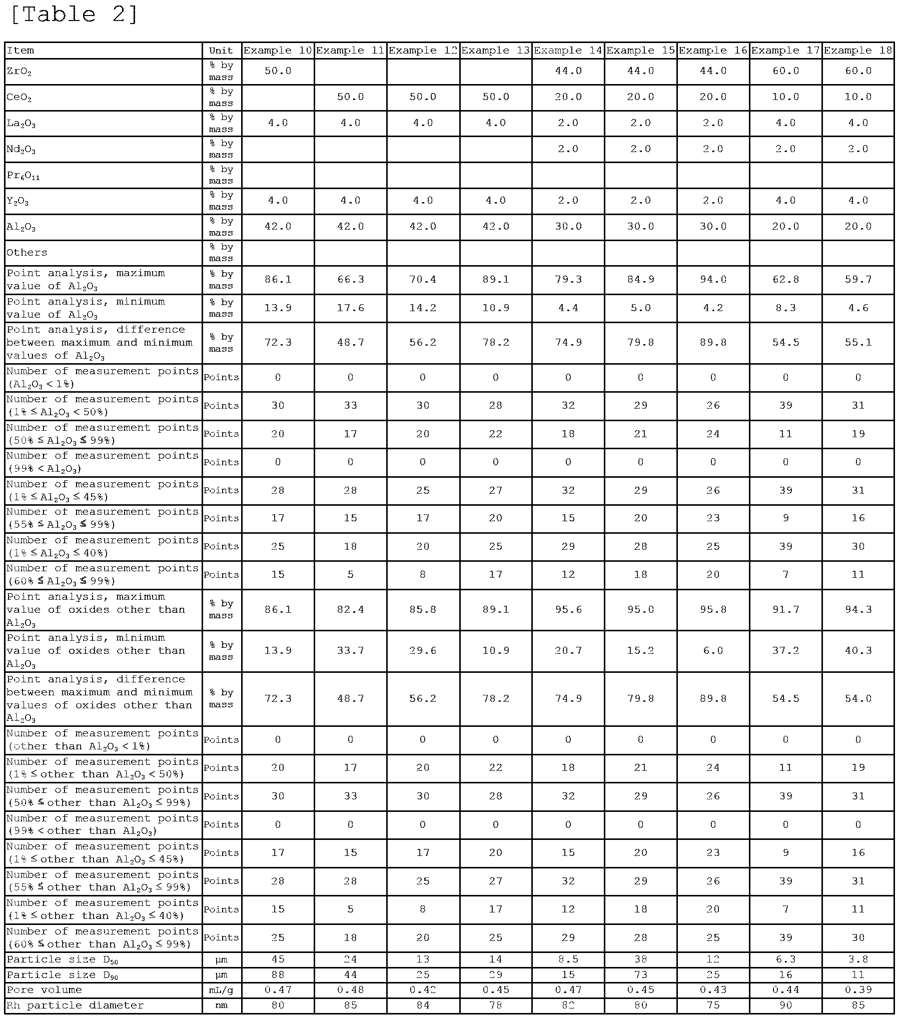

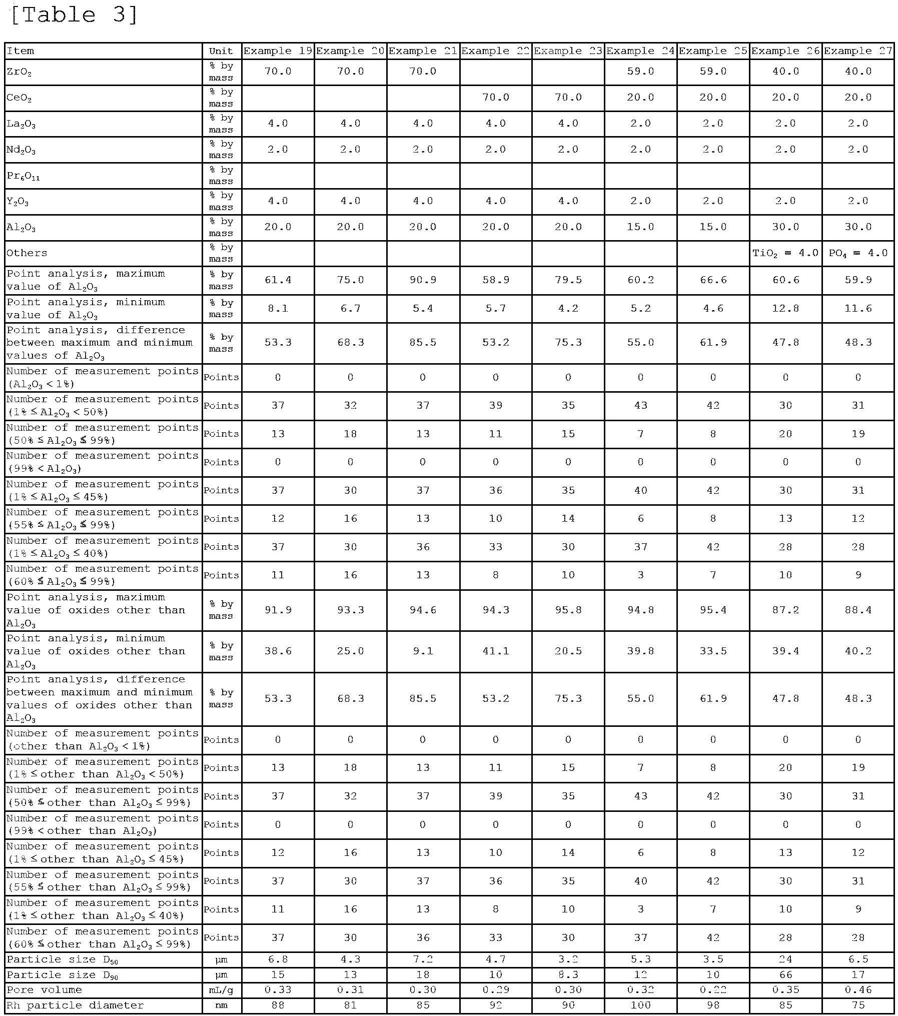

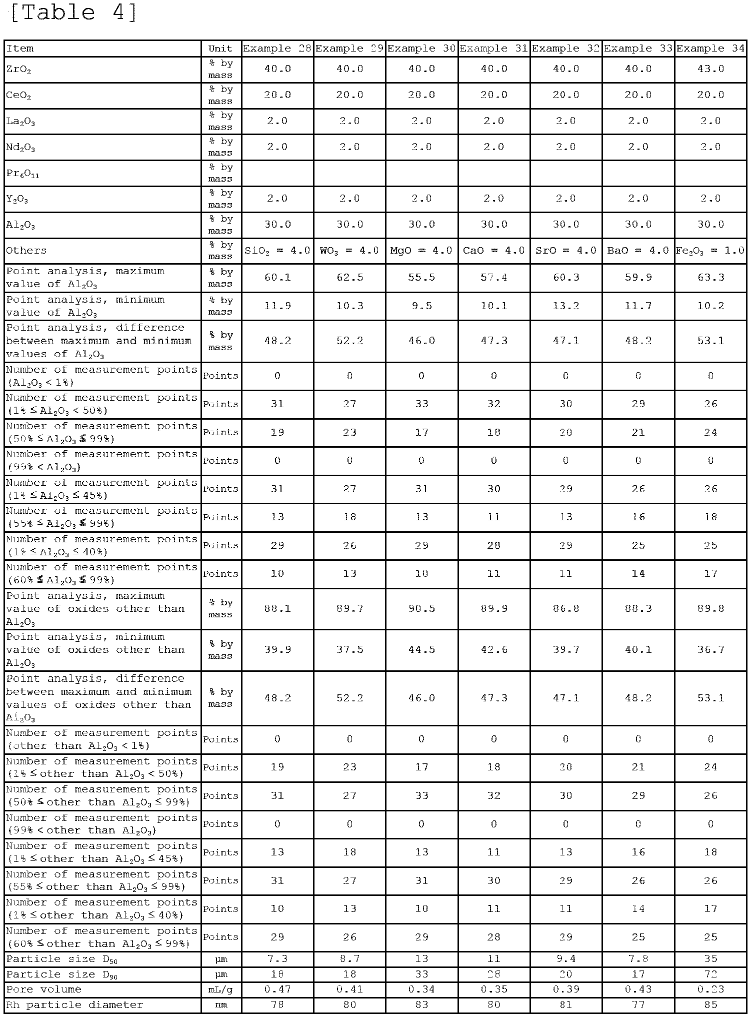

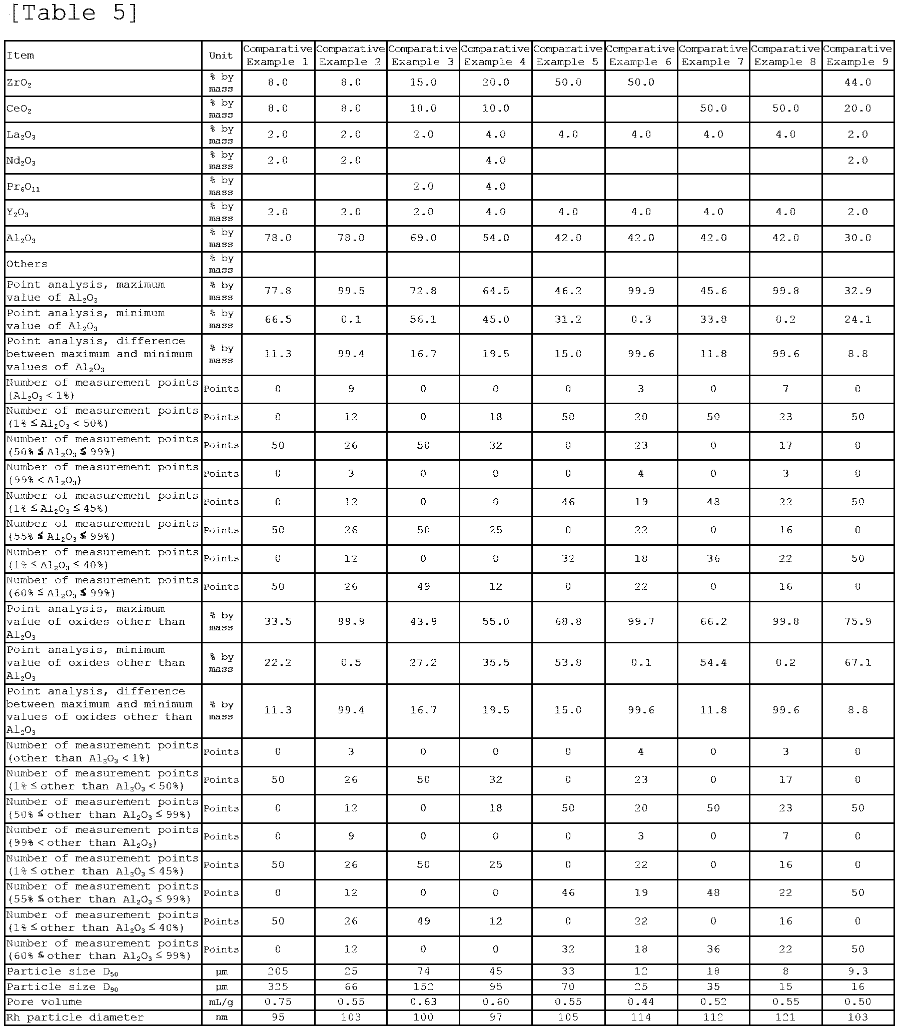

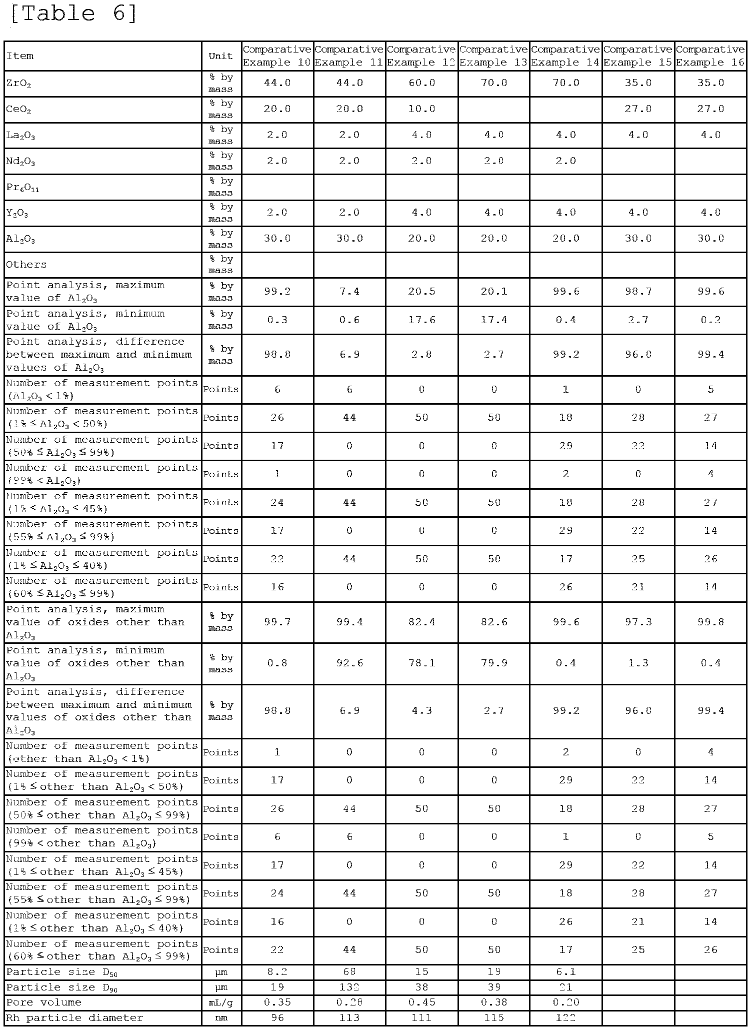

## Claims

1. An alumina-based composite oxide comprising:
alumina; and
ceria and/or zirconia, wherein
all of the following (1) to (4) are satisfied in point analysis of a total of 50 points according to the following procedures a to c by energy dispersive X-ray spectroscopy:
(1) among 50 measurement points, there are one or more measurement points at which an alumina content is 50% by mass or more and 99% by mass or less and a content of element oxides other than alumina is 1% by mass or more and 50% by mass or less,
(2) among 50 measurement points, there are one or more measurement points at which an alumina content is 1% by mass or more and less than 50% by mass and a content of element oxides other than alumina is more than 50% by mass and 99% by mass or less,
(3) a difference between maximum and minimum values of an alumina content at 50 measurement points is 20 or more and 95 or less, and
(4) a difference between maximum and minimum values of a content of element oxides other than alumina at 50 measurement points is 20 or more and 95 or less,
<procedures>
a: among particle images observed under a scanning electron microscope, one particle image having a cross section of 4 µm or more in length and 4 µm or more in width is selected,
b: composition analysis is performed at 25 measurement points spaced 1 µm apart in an area of 4 µm in length and 4 µm in width on the selected particle image, and
c: another particle image different from the particle image selected in the procedure a is selected and the same composition analysis as in the procedure b is performed.

2. The alumina-based composite oxide according to claim 1, wherein all of the following (5) and (6) are further satisfied in the point analysis of 50 points:
(5) among 50 measurement points, there are one or more measurement points at which an alumina content is 55% by mass or more and 99% by mass or less and a content of element oxides other than alumina is 1% by mass or more and 45% by mass or less, and
(6) among 50 measurement points, there are one or more measurement points at which an alumina content is 1% by mass or more and 45% by mass or less and a content of element oxides other than alumina is 55% by mass or more and 99% by mass or less.

3. The alumina-based composite oxide according to claim 1, wherein all of the following (7) and (8) are further satisfied in the point analysis of 50 points:
(7) among 50 measurement points, there are ten or more measurement points at which an alumina content is 50% by mass or more and 99% by mass or less and a content of element oxides other than alumina is 1% by mass or more and 50% by mass or less, and
(8) among 50 measurement points, there are ten or more measurement points at which an alumina content is 1% by mass or more and less than 50% by mass and a content of element oxides other than alumina is more than 50% by mass and 99% by mass or less.

4. The alumina-based composite oxide according to claim 2, wherein all of the following (9) and (10) are further satisfied in the point analysis of 50 points:
(9) among 50 measurement points, there are five or more measurement points at which an alumina content is 55% by mass or more and 99% by mass or less and a content of element oxides other than alumina is 1% by mass or more and 45% by mass or less, and
(10) among 50 measurement points, there are five or more measurement points at which an alumina content is 1% by mass or more and 45% by mass or less and a content of element oxides other than alumina is 55% by mass or more and 99% by mass or less.

5. The alumina-based composite oxide according to any one of claims 1 to 4, wherein an alumina content is 15% by mass or more and 80% by mass or less in composition analysis performed by an X-ray fluorescence method.

6. The alumina-based composite oxide according to any one of claims 1 to 4, wherein a content of ceria and/or zirconia is 0.1% by mass or more and 85% by mass or less in composition analysis performed by an X-ray fluorescence method.

7. The alumina-based composite oxide according to any one of claims 1 to 4, comprising any one or more of oxides of rare earth elements (excluding cerium and promethium) as an oxide other than alumina, ceria, and zirconia.

8. A method for producing the alumina-based composite oxide according to any one of claims 1 to 4, the method comprising:
a step 1 of adding an acid to sodium aluminate to obtain a hydrated alumina suspension A;
a step 2 of preparing an aqueous solution B-1 of a raw material salt containing cerium and/or zirconium and/or a suspension B-2 of a raw material salt containing cerium and/or zirconium;
a step 3 of mixing the suspension A with the aqueous solution B-1 and/or the suspension B-2 to obtain a precipitate of an aluminum-based composite precursor; and
a step 4 of performing heat treatment on the precipitate to obtain an alumina-based composite oxide.
